(19) **Europäisches Patentamt**
**European Patent Office**
**Office européen des brevets**

(11) **EP 4 628 173 A1**

(12) **EUROPEAN PATENT APPLICATION**
published in accordance with Art. 153(4) EPC

(43) Date of publication:
**08.10.2025 Bulletin 2025/41**

(21) Application number: **22967087.2**

(22) Date of filing: **28.11.2022**

(51) International Patent Classification (IPC):
***A63B 69/00*** (2006.01)  ***A63B 71/06*** (2006.01)

(52) Cooperative Patent Classification (CPC):
**A63B 69/00; A63B 71/06**

(86) International application number:
**PCT/JP2022/043827**

(87) International publication number:
**WO 2024/116252 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **SUZUKI, Tatsuya**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **CORRECTION METHOD, CORRECTION PROGRAM, AND INFORMATION PROCESSING DEVICE**

(57)     A correction method includes the following processing executed by a computer acquiring time-series skeleton information in which a plurality of joints included in a human body and coordinates of the plurality of joints are set respectively determining a motion state in a correction section based on first skeleton information in front of the correction section and second skeleton information behind the correction section with respect to the time-series skeleton information and correcting skeleton information in the correction section based on a result of determining the motion state.

FIG.5

EP 4 628 173 A1

# EP 4 628 173 A1

**Description**

Technical Field

The present invention relates to a correction method and the like.

Background Art

In relation to various sports, there is a prior art in which images of persons are captured using a plurality of cameras to perform 3D skeleton recognition.

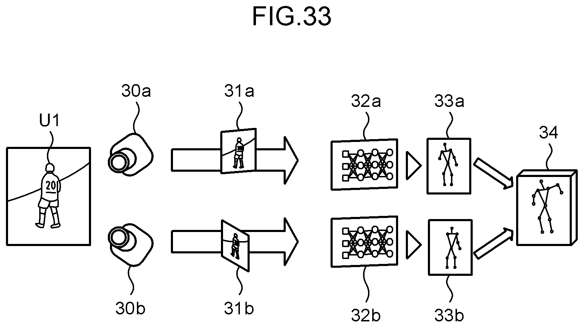

FIG. 33 is a diagram for explaining a prior art related to 3D skeleton recognition. In the example illustrated in FIG. 33, cameras 30a and 30b capture images of a person U1. The images captured by the cameras 30a and 30b will be referred to as images 31a and 31b, respectively.

The images 31a and 31b are input to training models 32a and 32b, respectively, and the training models 32a and 32b output 2D key points 33a and 33b, respectively. The training models 32a and 32b are trained deep learning models or the like. The 2D key points 33a and 33b are two-dimensional skeleton information or the like.

In the prior art, the 2D key points 33a and 33b are integrated to generate a 3D key point 34. The 3D key point 34 is three-dimensional skeleton information or the like. For example, three-dimensional coordinates of joints of the human body model are set to the 3D key point 34.

In the prior art, time-series 3D key points are generated by repeatedly executing the above-described processing on the time-series images captured by the cameras 30a and 30b. The time-series 3D key points are 3D skeleton recognition results. In FIG. 33, the cameras 30a and 30b are used for explanation, but other cameras may be further used to generate time-series 3D key points.

Here, in a case where 3D skeleton recognition is executed for a person performing a gymnastics performance as a target, an assistant other than the target person sometimes enters in front of the cameras, leading to a disturbance in the 3D key points.

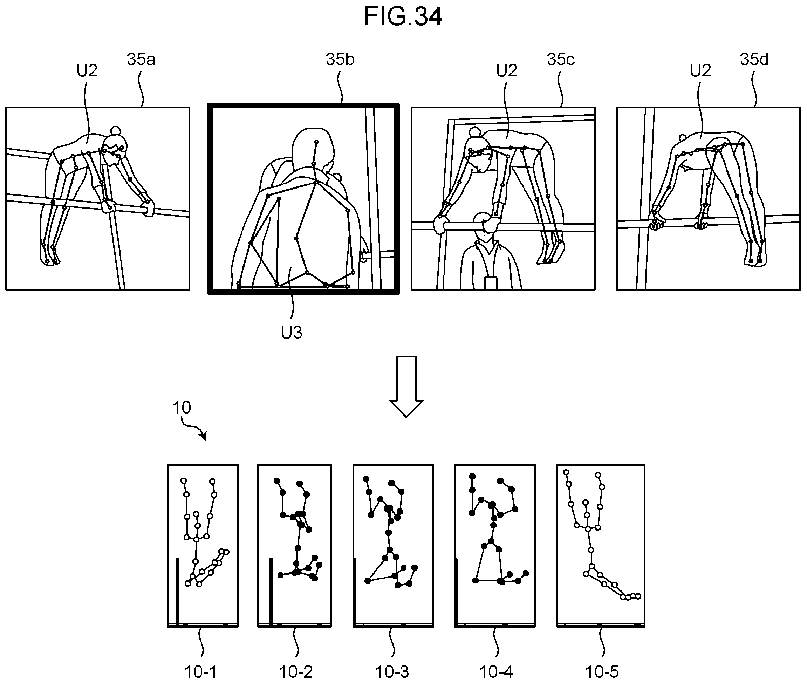

FIG. 34 is a diagram illustrating an example of an observation failure. Images 35a, 35b, 35c, and 35d in FIG. 34 are images captured by cameras at different capturing positions. In the images 35a to 35d, the person to be subjected to 3D skeleton recognition will be referred to as a person U2. For example, the image 35b includes a person U3 other than the person U2. Under such circumstances, when a 3D key point sequence is generated based on the images 35a to 35d and subsequent images, a 3D key point sequence 10 is generated. In the 3D key point sequence 10, disturbances occur in the 3D key points 10-2, 10-3, and 10-4 among the 3D key points 10-1, 10-2, 10-3, 10-4, and 10-5.

In order to ensure accuracy of 3D skeleton recognition, a section in which the 3D key points are disturbed is specified as a correction section, and the 3D key points in the correction section are corrected based on the motions in the 3D key points before and after the correction section.

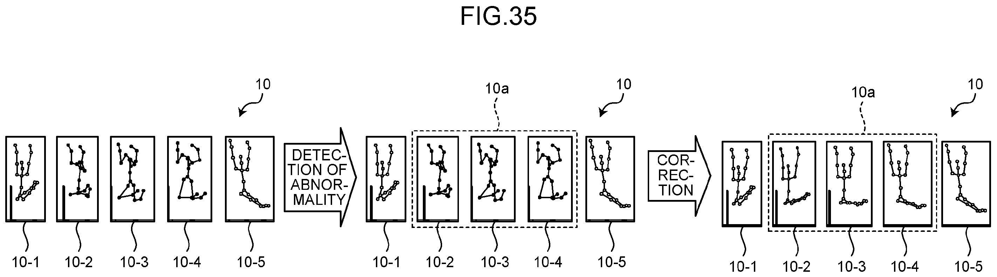

FIG. 35 is a diagram for explaining a correction method of the prior art. The example illustrated in FIG. 35 will be described using a 3D key point sequence 10. The 3D key point sequence 10 includes 3D key points 10-1 to 10-5. In the prior art, by detecting an abnormality in the 3D key point sequence 10, disturbed 3D key points 10-2, 10-3, and 10-4 are detected. The section of disturbed 3D key points 10-2,10-3, and 10-4 will be referred to as a correction section 10a. In the prior art, the 3D key points 10-2 to 10-4 are corrected using the 3D key points 10-1 and 10-5 before and after the correction section 10a.

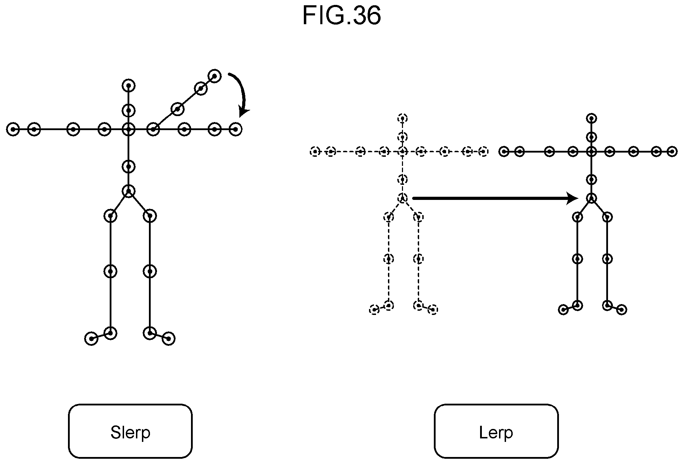

Here, examples of prior arts for correcting 3D key points in a correction section based on 3D key points before and after the correction section, include a spherical liner interpolation (Slerp) and a liner interpolation (Lerp). FIG. 36 is a diagram for explaining Slerp and Lerp. Slerp is a spherical linear interpolation and Lerp is a linear interpolation. The spherical linear interpolation is a method of performing a correction on two joints spaced apart from each other, assuming that there is a sphere (rotation) between the joints. The linear interpolation is a method of performing a correction on two joints spaced apart from each other, assuming that there is a straight line between the joints. For example, in the example described with reference to FIG. 35, the optimal positions of the respective joints are specified based on the positions of the respective joints in the 3D key points 10-1 and 10-5 before and after the correction section 10a, Slerp, and Lerp, and the 3D key points 10-2 to 10-4 are corrected.

Citation List

Patent Literature

Patent Literature 1: Japanese Laid-open Patent Publication No. 2017-138915

Summary

Technical Problem

However, in the above-described prior art, there is a problem that it is not possible to improve accuracy in recognizing a skeleton of a person.

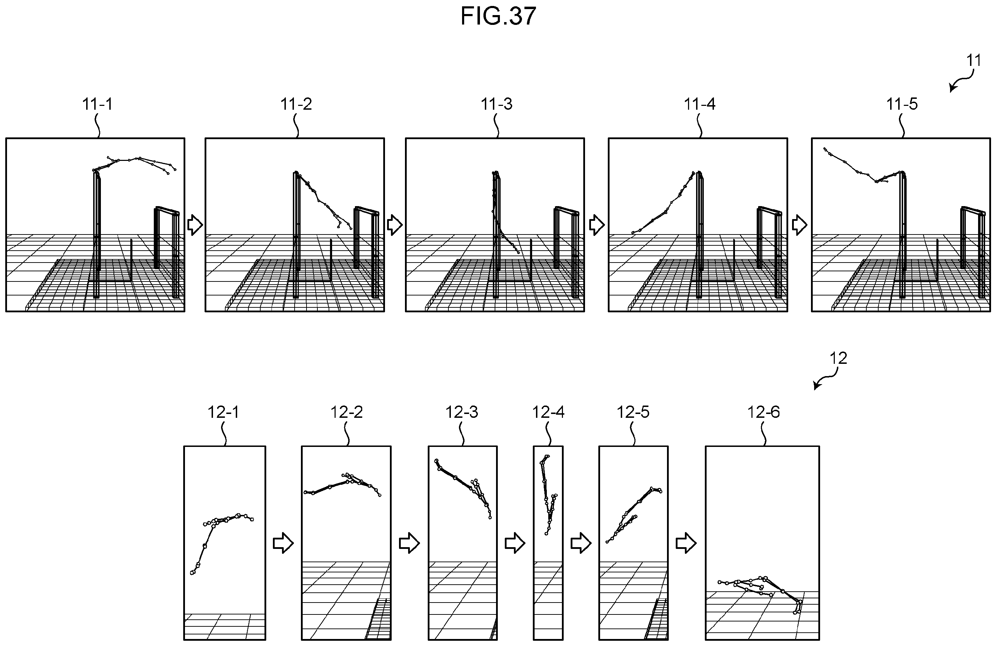

Here, the problem of the prior art will be described by exemplifying a case where a person performs a whole-body rotation in gymnastics or the like. For example, a wheel performed with an uneven bar, a horizontal bar, a parallel bar, or the like is a whole-body rotation. Furthermore, a somersault performed by a person with a terminal element such as a vault is a whole-body rotation. An appropriate 3D key point sequence by a whole-body rotation is illustrated in FIG. 37.

FIG. 37 is a diagram illustrating an example of an appropriate 3D key point sequence of a whole-body rotation. In FIG. 37, a 3D key point sequence 11 representing time-series 3D key points indicating a whole-body rotation by a wheel. The 3D key point sequence 11 includes frames 11-1, 11-2, 11-3, 11-4, and 11-5. Furthermore, a 3D key point sequence 12 represents time-series 3D key points indicating a whole-body rotation by a somersault. The 3D key point sequence 12 includes frames 12-1, 12-2, 12-3, 12-4, 12-5, and 12-6. Generally, the whole-body rotation by the wheel, the whole-body rotation by somersault, and the like are high-speed rotations.

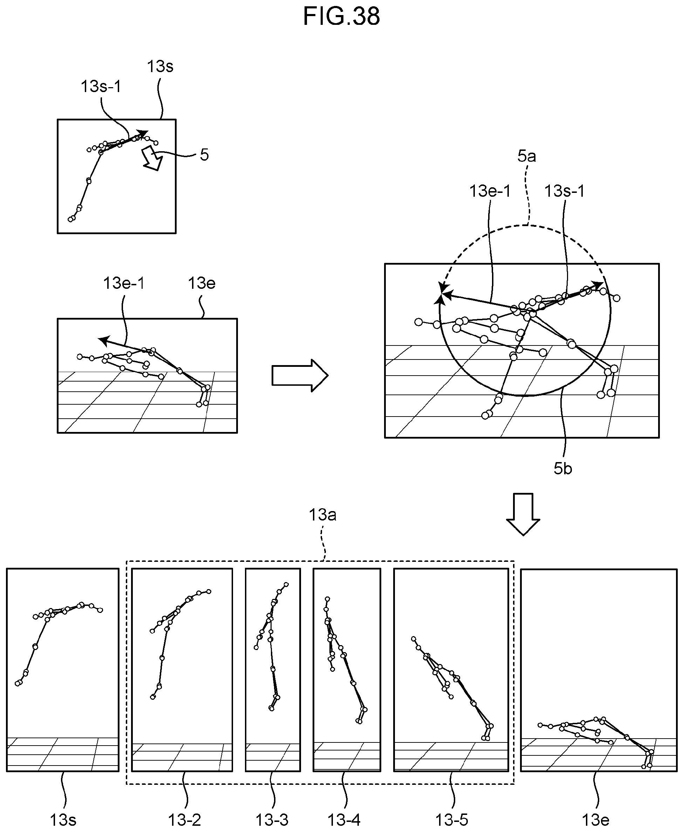

FIG. 38 is a diagram for explaining a problem of the prior art. A 3D key point 13s in FIG. 38 is set as a front 3D key point among 3D key points before and after a correction section. A 3D key point 13e is set as a rear 3D key point among the 3D key points before and after the correction section. A reference line of a whole-body angle in the 3D key point 13s is denoted by 13s-1. The original rotation direction of the person is defined as a rotation direction 5. A reference line of a whole-body angle in the 3D key point 13e is denoted by 13e-1.

Paths from the reference line 13s-1 to the reference line 13e-1 include a short path 5a and a long path 5b. In the prior art, in the whole-body rotation, if the correction path is incorrectly selected, the correction accuracy may deteriorate. In the correction by Slerp described in the prior art, it is general that, if the short path 5a is selected on the premise that a high-speed rotation does not occur, and the 3D key points in the correction section are corrected, 3D key points 13-2, 13-3, 13-4, and 13-5 illustrated in a correction result 13a are obtained. By correcting the 3D key points based on the short path 5a that is not appropriate as described above, the 3D key points are corrected in a direction opposite to the original rotation direction 5, and the correction accuracy deteriorate. The motions of the 3D key points in the original rotation direction 5 are illustrated in the 3D key point sequence 12 of FIG. 37.

As described with reference to FIG. 38, when the accuracy in correcting the 3D key points deteriorate, the accuracy in recognizing the skeleton of the person also deteriorate.

In one aspect, an object of the present invention is to provide a correction method, a correction program, and an information processing apparatus capable of improving accuracy in recognizing a skeleton of a person. Solution to Problem

According to an aspect of the embodiment of the invention, a correction method includes the following processing executed by a computer acquiring time-series skeleton information in which a plurality of joints included in a human body and coordinates of the plurality of joints are set respectively determining a motion state in a correction section based on first skeleton information in front of the correction section and second skeleton information behind the correction section with respect to the time-series skeleton information and correcting skeleton information in the correction section based on a result of determining the motion state.

Advantageous Effects of Invention

It is possible to improve accuracy in recognizing a skeleton of a person.

[Brief Description of Drawings] (BRIEF DESCRIPTION OF DRAWINGS)

FIG. 1 is a diagram illustrating an example of a human body model.
FIG. 2 is a diagram illustrating examples of joint names.
FIG. 3 is a diagram illustrating a system according to the present embodiment.
FIG. 4 is a diagram for explaining a stationary determination.
FIG. 5 is a diagram for explaining a circular motion determination.
FIG. 6 is a flowchart illustrating a processing procedure of correction processing corresponding to a motion state according to the present embodiment.
FIG. 7 is a diagram for explaining an instrument contact determination.
FIG. 8 is a diagram for explaining a whole-body position interpolation in a correction section based on a contact with an instrument.
FIG. 9 is a diagram illustrating an example of a motion prediction result.

FIG. 10 is a diagram illustrating an example of a distribution of 3D key points regarding an abnormal feature.

FIG. 11 is a diagram for explaining processing of calculating a first abnormality detection threshold.

FIG. 12 is a diagram for explaining processing of calculating a second abnormality detection threshold.

FIG. 13 is a diagram for explaining first abnormality detection.

FIG. 14 is a diagram illustrating an example in which an abnormal section is optimized based on a first convergence condition.

FIG. 15 is a diagram illustrating an example in which an abnormal section is optimized based on a second convergence condition.

FIG. 16 is a functional block diagram illustrating a configuration of an information processing apparatus according to the present embodiment.

FIG. 17 is a diagram illustrating an example of a data structure of a 3D key point table.

FIG. 18 is a diagram illustrating an example of a reference posture.

FIG. 19 is a diagram for explaining an example of a three-dimensional rotation angle of a root.

FIG. 20 is a diagram for explaining an example of a three-dimensional rotation angle of a joint.

FIG. 21 is a diagram for explaining processing of calculating a three-dimensional rotation angle of a root by the rigid body alignment.

FIG. 22 is a diagram (1) for explaining processing of calculating a three-dimensional rotation angle of a joint by the Rodrigues' rotation formula.

FIG. 23 is a diagram (2) for explaining processing of calculating a three-dimensional rotation angle of a joint by the Rodrigues' rotation formula.

FIG. 24 is a flowchart illustrating a procedure of processing of the information processing apparatus according to the present embodiment.

FIG. 25 is a flowchart illustrating a processing procedure of correction section specifying processing.

FIG. 26 is a flowchart illustrating a processing procedure of correction processing.

FIG. 27 is a flowchart illustrating a processing procedure of correction processing based on a contact with an instrument.

FIG. 28 is a flowchart illustrating a processing procedure of threshold setting processing.

FIG. 29 is a diagram (1) for explaining the effect of the information processing apparatus.

FIG. 30 is a diagram (2) for explaining the effect of the information processing apparatus.

FIG. 31 is a diagram (3) for explaining the effect of the information processing apparatus.

FIG. 32 is a diagram illustrating an example of a hardware configuration of a computer that implements functions similar to those of the information processing apparatus according to the embodiment.

FIG. 33 is a diagram for explaining a prior art related to 3D skeleton recognition.

FIG. 34 is a diagram illustrating an example of an observation failure.

FIG. 35 is a diagram for explaining a correction method of the prior art.

FIG. 36 is a diagram for explaining Slerp and Lerp.

FIG. 37 is a diagram illustrating an example of an appropriate 3D key point sequence of a whole-body rotation.

FIG. 38 is a diagram for explaining a problem of the prior art.

Description of Embodiments

Hereinafter, an embodiment for a correction method, a correction program, and an information processing apparatus disclosed in the present application will be described in detail with reference to the drawings. Note that the present invention is not limited by this embodiment.

[Embodiment]

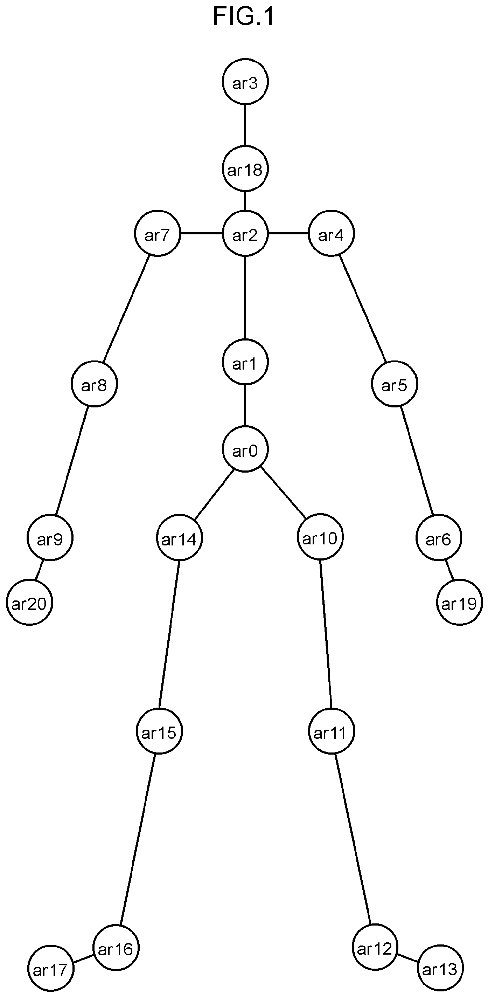

Before describing the present embodiment, an example of a human body model will be described. FIG. 1 is a diagram illustrating an example of a human body model. As illustrated in FIG. 1, the human body model is defined by 21 joints ar0 to ar20.

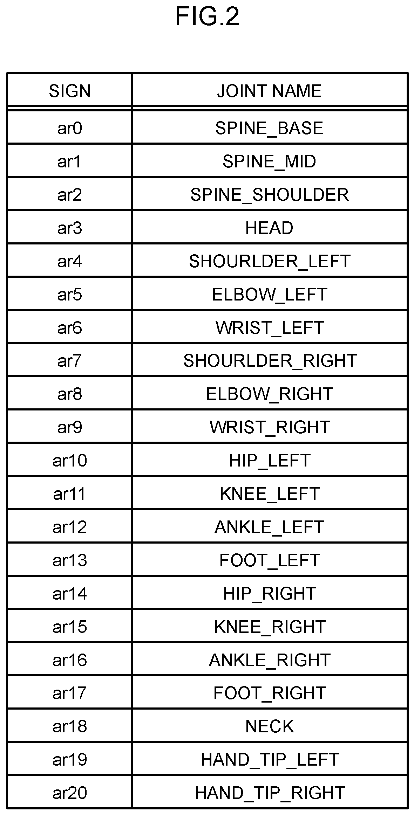

The relationship between the joints ar0 to ar20 illustrated in FIG. 1 and joint names is as illustrated in FIG. 2. FIG. 2 is a diagram illustrating examples of joint names. For example, the joint name of the joint ar0 is "SPINE_BASE". The joint names of the joints ar1 to a20 are as illustrated in FIG. 2, and the description thereof will be omitted.

The 3D key points handled in the present embodiment are data in which three-dimensional coordinates corresponding to the joints ar0 to ar20 of the human body model are set. In the following description, the 3D key points arranged in time series will be referred to as a "3D key point sequence".

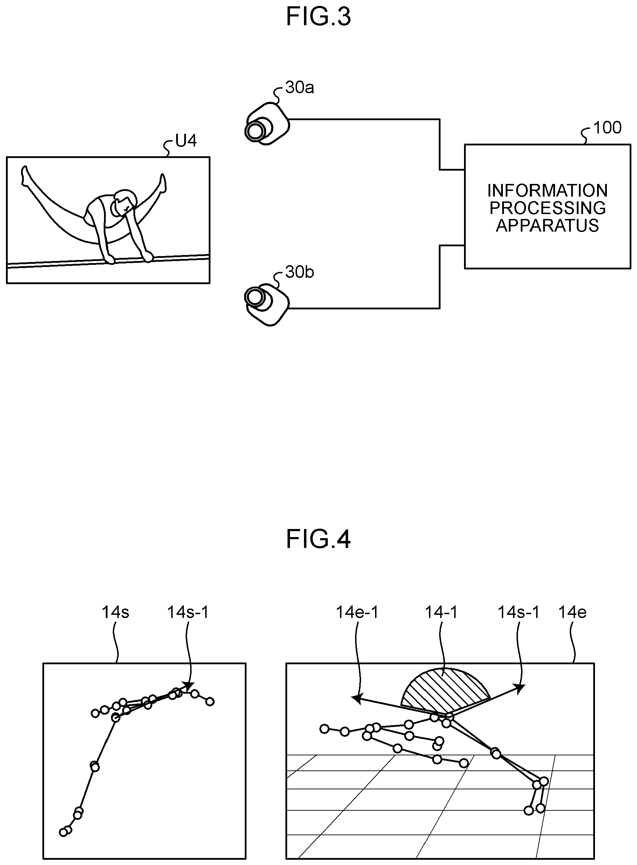

Next, an example of a system according to the present embodiment will be described. FIG. 3 is a diagram illustrating a system according to the present embodiment. As illustrated in FIG. 3, the system according to the present embodiment includes cameras 30a and 30b and an information processing apparatus 100. The cameras 30a and 30b and the information processing apparatus 100 are connected to each other in a wireless or wired manner.

The cameras 30a and 30b capture videos (images) of a person U4. As an example, it is assumed that the person U4 performs a competition using an instrument. In the following description, the cameras 30a and 30b will be collectively referred to as a camera 30.

The camera 30 transmits data of the captured video to the information processing apparatus 100. In the following description, the data of the video will be referred to as "video data". The video data includes time-series image frames. Frame numbers are assigned to the image frames in ascending order. The image frame is data of a still image captured by the camera 30 at a certain timing.

The information processing apparatus 100 generates a 3D key point sequence based on the video data received from the camera 30. The information processing apparatus 100 sets a correction section in the 3D key point sequence, and determines a motion state of the person U4 based on the 3D key points before and after the correction section. The information processing apparatus 100 determines whether the person U4 is in contact with the instrument based on the 3D key points before and after the correction section. The information processing apparatus 100 corrects the 3D key points in the correction section based on the determination results as to the motion state of the person U4 and whether the person U4 is in contact with the instrument.

Note that the information processing apparatus 100 acquires a distribution of normal 3D key points and a distribution of abnormal 3D key points in advance, and specifies a first abnormality detection threshold $Th_1$ and a second abnormality detection threshold $Th_2$. The first abnormality detection threshold $Th_1$ is a boundary value at which the degree of separation between the distribution of normal 3D key points and the distribution of abnormal 3D key points is maximum. The second abnormality detection threshold $Th_2$ is a threshold having a higher sensitivity than the first abnormality detection threshold $Th_1$. The information processing apparatus 100 sets a correction section in the 3D key point sequence based on the first abnormality detection threshold $Th_1$ and the second abnormality detection threshold $Th_2$.

Hereinafter, an example of processing in which the information processing apparatus 100 determines a motion state will be described. The processing of determining the motion state includes "long-term motion determination", "stationary determination", "circular motion determination", and "circular motion direction determination". In the following description, the 3D key point will be appropriately referred to as a frame.

The "long-term motion determination" executed by the information processing apparatus 100 will be described. The information processing apparatus 100 specifies the number of 3D key points (hereinafter, the number of frames) in the correction section set in the 3D key point sequence. When the number of frames is a threshold $Th_3$, the information processing apparatus 100 determines that the motion state is a long-term motion. On the other hand, when the number of frames is smaller than the threshold $Th_3$, the information processing apparatus 100 determines that the motion state is not a long-term motion. The threshold $Th_3$ is set in advance.

The "stationary determination" executed by the information processing apparatus 100 will be described. The information processing apparatus 100 specifies a 3D key point in front of the correction section set in the 3D key point sequence and a 3D key point behind the correction section. In the following description, the 3D key point in front of the correction section will be referred to as a "previous frame". The 3D key point behind the correction section will be referred to as a "subsequent frame". For example, assuming that the correction section is the correction section 10a described with reference to FIG. 35, the previous frame is the 3D key point 10-1, and the subsequent frame is the 3D key point 10-5. When a difference in whole-body rotation from the previous frame to the subsequent frame is smaller than a threshold $Th_4$, the information processing apparatus 100 determines that the motion state is a stationary motion. On the other hand, when the difference in whole-body rotation from the previous frame to the subsequent frame is larger than or equal to the threshold $Th_4$, the information processing apparatus 100 determines that the motion state is not a stationary motion.

FIG. 4 is a diagram for explaining a stationary determination. In FIG. 4, it is assumed that the previous frame is a "previous frame 14s", and the subsequent frame is a "subsequent frame 14e". It is assumed that the reference line of the previous frame 14s is a "reference line 14s-1". It is assumed that the reference line of the subsequent frame 14e is referred to as a "reference line 14e-1". The information processing apparatus 100 specifies an angle 14-1 formed by the reference line 14s-1 and the reference line 14e-1 as a difference in whole-body rotation from the previous frame 14s to the subsequent frame 14e. When the formed angle 14-1 is smaller than the threshold $Th_4$, the information processing apparatus 100 determines that the motion state is a stationary motion. When the formed angle 14-1 is larger than or equal to the threshold $Th_4$, the information processing apparatus 100 determines that the motion state is not a stationary motion.

The "circular motion determination" executed by the information processing apparatus 100 will be described. The information processing apparatus 100 calculates a predicted rotation axis $v_{pred}$ based on a quaternion $q_{start}$ of the previous frame with respect to the correction section and a quaternion $q_{start-1}$ of a frame (3D key point) immediately preceding the previous frame. Here, a quaternion of a certain frame indicates a rotation from coordinates of a joint in the certain frame to coordinates of a joint in a reference posture. The reference posture is data defined by a plurality of nodes corresponding to joints of a human body, and coordinates of each node are set in advance. The predicted rotation axis $v_{pred}$ corresponds to a normal line of a relative quaternion $q^{-1}_{start-1}{}^{*}q_{start}$ representing a relative rotation from the quaternion $q_{start-1}$ to the

quaternion $q_{start}$.

The information processing apparatus 100 calculates a short-path quaternion $q_{short\_end}$ and a short-path quaternion $q_{long\_end}$ based on the quaternion $q_{start}$ of the previous frame with respect to the correction section and a quaternion $q_{end}$ of the subsequent frame with respect to the correction section. The information processing apparatus 100 calculates the quaternion $q_{short\_end}$ based on Formula (1). The information processing apparatus 100 calculates the quaternion $q_{long\_end}$ based on Formula (2).

$$q_{short\_end} = \begin{cases} q_{end} & \text{if } q_{start} \cdot q_{end} \geq 0 \\ -q_{end} & \text{if } q_{start} \cdot q_{end} < 0 \end{cases} \qquad \cdots (1)$$

$$q_{long\_end} = \begin{cases} -q_{end} & \text{if } q_{start} \cdot q_{end} \geq 0 \\ q_{end} & \text{if } q_{start} \cdot q_{end} < 0 \end{cases} \qquad \cdots (2)$$

The information processing apparatus 100 calculates a rotation axis $v_{short}$ in a short path based on the quaternion $q_{start}$ and the quaternion $q_{short\_end}$. The rotation axis $v_{short}$ corresponds to a normal line of a relative quaternion $q^{-1}_{start}{}^*q_{short\text{-}end}$ representing a relative rotation from the quaternion $q_{start}$ to a quaternion $q_{short\text{-}end}$.

The information processing apparatus 100 calculates a rotation axis $v_{long}$ in a long path based on the quaternion $q_{start}$ and the quaternion $q_{long\_end}$. The rotation axis $v_{long}$ corresponds to a normal line of a relative quaternion $q^{-1}_{start}{}^*q_{long\text{-}end}$ representing a relative rotation from the quaternion $q_{start}$ to a quaternion $q_{long\text{-}end}$.

The information processing apparatus 100 calculates a first cos similarity between the predicted rotation axis $v_{pred}$ and the $v_{short}$. Furthermore, the information processing apparatus 100 calculates a second cos similarity between the predicted rotation axis $v_{pred}$ and the $v_{long}$. When at least one of the first cos similarity and the second cos similarity is larger than or equal to a threshold $Th_5$, the information processing apparatus 100 determines that the motion state is a circular motion. On the other hand, when the first cos similarity and the second cos similarity are smaller than the threshold $Th_5$, the information processing apparatus 100 determines that the motion state is not a circular motion.

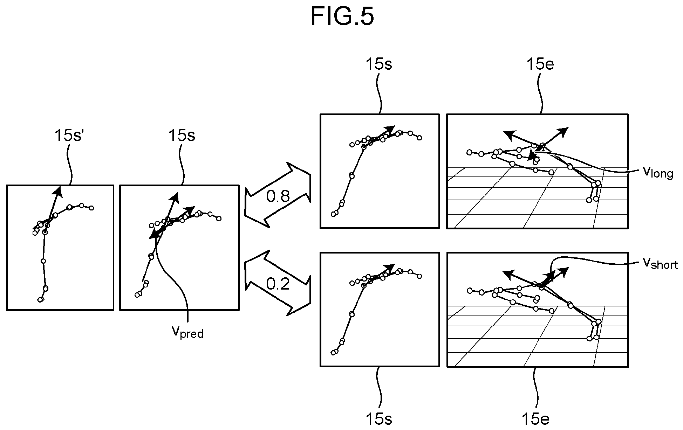

FIG. 5 is a diagram for explaining a circular motion determination. In FIG. 5, it is assumed that the previous frame with respect to the correction section is a frame 15s. It is assumed that the frame immediately preceding the frame 15s is a frame 15s'. It is assumed that the subsequent frame is a frame 15e. The information processing apparatus 100 calculates a predicted rotation axis $v_{pred}$ based on the quaternion $q_{start}$ of the frame 15s of the correction section and the quaternion $q_{start-1}$ of the frame 15s'.

The information processing apparatus 100 the information processing apparatus 100 calculates a rotation axis $v_{short}$ in a short path based on the quaternion $q_{start}$ and the quaternion $q_{short\_end}$. The information processing apparatus 100 calculates a rotation axis $v_{long}$ in a long path based on the quaternion $q_{start}$ and the quaternion $q_{long\_end}$. For example, the information processing apparatus 100 calculates a first cos similarity (0.2) between the predicted rotation axis $v_{pred}$ and the $q_{short\_end}$. The information processing apparatus 100 calculates a second cos similarity (0.8) between the predicted rotation axis $v_{pred}$ and the $q_{long\_end}$. When it is assumed that the threshold $Th_5$ is "0.5", the information processing apparatus 100 determines that the motion state is a rotational motion because the second cos similarity is larger than or equal to the threshold $Th_5$.

The "circular motion direction determination" executed by the information processing apparatus 100 will be described. In a case where the motion state is a circular motion, the information processing apparatus 100 performs a circular motion method determination. When the first cos similarity out of the first cos similarity and the second cos similarity is larger than or equal to the threshold $Th_5$, the information processing apparatus 100 determines a direction of a short path as a direction of the circular motion. On the other hand, when the second cos similarity out of the first cos similarity and the second cos similarity is larger than or equal to the threshold $Th_5$, the information processing apparatus 100 determines a direction of a long path as a direction of the circular motion.

In the example described with reference to FIG. 5, since the second cos similarity is larger than or equal to the threshold $Th_5$, a direction of a long path is determined as a direction of the circular motion.

The information processing apparatus 100 determines the motion state of the person U4 by executing the above-described processing. The information processing apparatus 100 corrects the 3D key points in the correction section based on the determination result as to the motion state. The information processing apparatus 100 selects one of an interpolation by Slerp (short path), an interpolation by Slerp (long path), and an interpolation by machine training model, and performs correction.

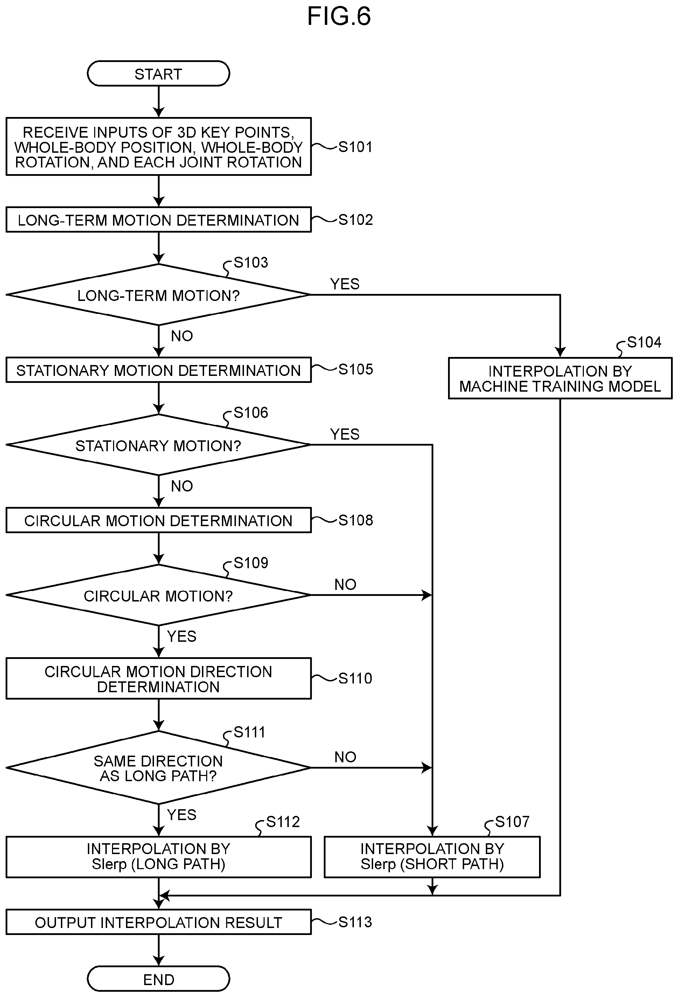

For example, based on the processing procedure of FIG. 6, the information processing apparatus 100 selects one of an interpolation by Slerp (short path), an interpolation by Slerp (long path), and an interpolation by machine training model, and performs correction.

FIG. 6 is a flowchart illustrating a processing procedure of correction processing corresponding to a motion state according to the present embodiment. As illustrated in FIG. 6, the information processing apparatus 100 receives inputs of 3D key points, a whole-body position, a whole-body rotation, and each joint rotation (step S101). The information processing apparatus 100 performs a long-term motion determination (step S102).

When the motion state is a long-term motion (step S103, Yes), the information processing apparatus 100 executes an interpolation by machine training model (step S104), and proceeds to step S113.

On the other hand, when the motion state is not a long-term motion (step S103, No), the information processing apparatus 100 performs a stationary motion determination (step S105). When the motion state is a stationary motion (step S106, Yes), the information processing apparatus 100 performs an interpolation by Slerp (short path) (step S107), and proceeds to step S113.

On the other hand, when the motion state is not a stationary motion (step S106, No), the information processing apparatus 100 performs a circular motion determination (step S108). When the motion state is not q circular motion (step S109, No), the information processing apparatus 100 proceeds to step S107.

On the other hand, when the motion state is a circular motion (step S109, Yes), the information processing apparatus 100 performs a circular motion direction determination (step S110). When the direction of the circular motion is not the same as that of the long path (step S111, No), the information processing apparatus 100 proceeds to step S107. The direction same as that of the long path means the direction same as that of the short path.

On the other hand, when the direction of the circular motion is the same as the direction of the long path (step S111, Yes), the information processing apparatus 100 executes an interpolation by Slerp (long path) (step S112), and outputs an interpolation result (step S113).

Next, the interpolation by Slerp (short path), the interpolation by Slerp (long path), and the interpolation by machine training model executed by the information processing apparatus 100 will be described.

The "interpolation by Slerp (short path)" executed by the information processing apparatus 100 will be described. The information processing apparatus 100 executes an interpolation by Slerp (short path) based on Formula (3). In Formula (3), "t" denotes a time index and is defined as "t=n/N". "n" denotes an index. "N" denotes the number of frames in an interpolation section. "θ" denotes an angle formed by the quaternion $q_{start}$ and the quaternion $q_{short\_end}$.

$$q_t = \frac{\sin\big((1-t)\theta\big)}{\sin\theta} q_{start} + \frac{\sin(t\theta)}{\sin\theta} q_{short\_end} \qquad \cdots (3)$$

The information processing apparatus 100 calculates a quaternion qt at time t based on Formula (3), and corrects coordinates of joints at 3D key points corresponding to time t in the correction section according to the quaternion qt.

The "interpolation by Slerp (long path)" executed by the information processing apparatus 100 will be described. The information processing apparatus 100 executes an interpolation by Slerp (long path) based on Formula (4). In Formula (4), "t" denotes a time index and is defined as "t=n/N". "n" denotes an index. "N" denotes the number of frames in an interpolation section. "θ" denotes an angle formed by the quaternion $q_{start}$ and the quaternion $q_{long\text{-}end}$.

$$q_t = \frac{\sin\big((1-t)\theta\big)}{\sin\theta} q_{start} + \frac{\sin(t\theta)}{\sin\theta} q_{long\_end} \qquad \cdots (4)$$

The information processing apparatus 100 calculates a quaternion qt at time t based on Formula (4), and corrects coordinates of joints at 3D key points corresponding to time t in the correction section according to the quaternion qt.

The "interpolation by machine training model" executed by the information processing apparatus 100 will be described. For example, the information processing apparatus 100 uses a trained machine training model to which a previous frame and a subsequent frame are input and from which a path of coordinates of joints from the previous frame to the subsequent frame is output. The machine training model is a neural network (NN) or the like. The information processing apparatus 100 corrects the 3D key points in the correction section based on the output result of the machine training model.

Note that the information processing apparatus 100 may interpolate the 3D key points in the correction section using a machine training model described in Non-Patent Literature "Felix G. Harvey, et al. "Robust Motion In-betweening", In ACM Transactions on Graphics (TOG), 2020".

Here, after performing the correction corresponding to the above-described motion state, the information processing apparatus 100 performs an "instrument contact determination" for determining whether the person U4 is in contact with an instrument. When it is determined by the instrument contact determination that the person U4 is in contact with the instrument, the information processing apparatus 100 performs a "whole-body position interpolation in the correction section based on the contact with the instrument". On the other hand, when it is determined by the instrument contact determination that the person U4 is not in contact with the instrument, the information processing apparatus 100 performs a "whole-body position correction based on the prediction of the motion".

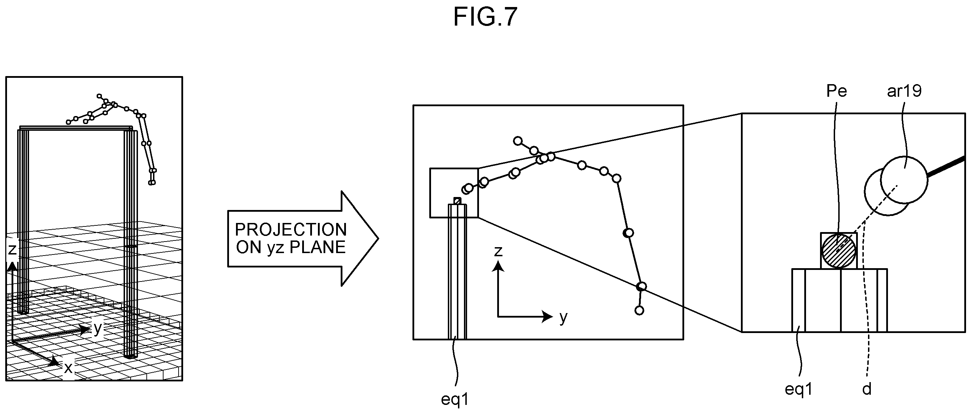

The "instrument contact determination" executed by the information processing apparatus 100 will be described. FIG. 7 is a diagram for explaining an instrument contact determination. It is assumed that coordinates of an instrument eq1, joints to be determined (determination joints), and a threshold $Th_6$ are defined in advance. The coordinates of the instrument eq1 can be defined by a point based on n-dimensional coordinates (=1, 2, 3), a plane based on a plurality of n-dimensional coordinates, or the like. For example, the information processing apparatus 100 defines a point by two-dimensional coordinates by projecting the three-dimensional coordinates of the instrument eq1 on the yz plane. It is assumed that the determination joints are a joint at the tip of the left hand and a joint at the tip of the right hand. In the human body model described with reference to FIG. 1, the joint at the tip of the left hand is the joint ar19. The joint at the tip of the right hand is the joint ar20.

The information processing apparatus 100 selects one joint from among the plurality of determination joints as a "joint-of-interest", and calculates a distance d between the joint-of-interest and the instrument eq1. The information processing apparatus 100 executes the above-described processing on all the determination joints in the previous frame and the subsequent frame with respect to the correction section. When there is one or more joints-of-interest satisfying $d<Th_6$ in both the previous frame and the subsequent frame, the information processing apparatus 100 the information processing apparatus 100 determines that the person U4 is in contact with the instrument q1.

In the description with reference to FIG. 7, it is assumed that, among the points on the yz plane of the instrument eq1, the preset point is $p_e=(y_e, z_e)$. The information processing apparatus 100 determines that the person U4 is in contact with eq1 when the distance d between the joint ar19 and $p_e$ satisfies $d<Th_6$ in the previous frame and the subsequent frame. In the following description, among the joints-of-interest, a joint satisfying $d<Th_6$ in the previous frame and the subsequent frame will be referred to as a "contact joint".

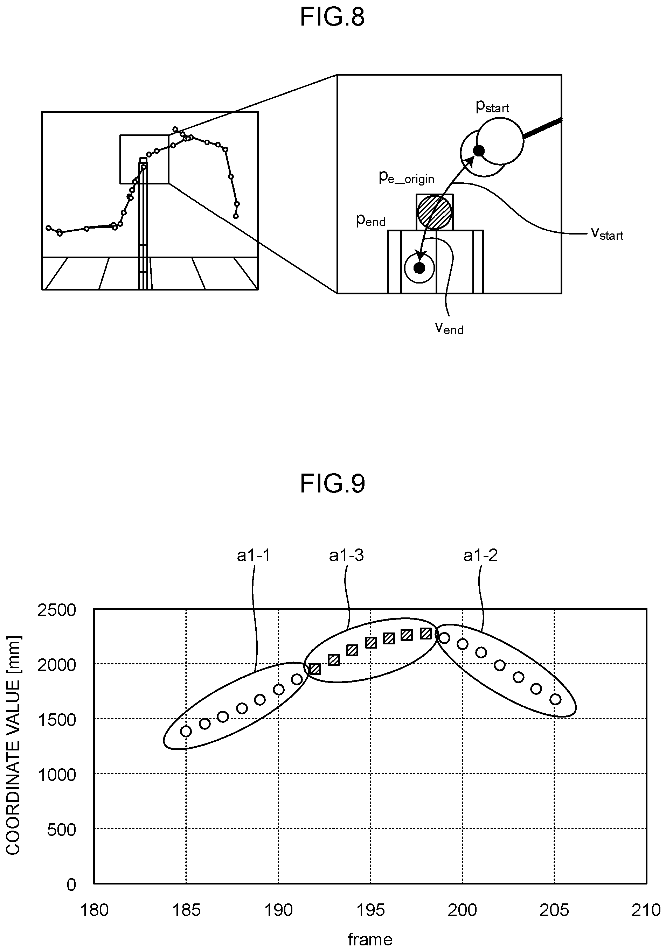

The "whole-body position interpolation in the correction section based on the contact with the instrument" executed by the information processing apparatus 100 will be described. FIG. 8 is a diagram for explaining a whole-body position interpolation in a correction section based on a contact with an instrument. The information processing apparatus 100 calculates contact joints-of-interest $p_{start}$, $p_{end}$, a rotation center $p_{e\_origin}$, and vectors $v_{start}$ and $V_{end}$ by executing the following processing.

The information processing apparatus 100 calculates an average value of coordinates of the contact joints included in the previous frame as the contact joint-of-interest $p_{start}$. In a case where one contact joint is included in the previous frame, the information processing apparatus 100 sets the coordinates of the contact joint as the contact joint-of-interest $p_{start}$ as they are.

The information processing apparatus 100 calculates an average value of coordinates of the contact joints included in the subsequent frame as the contact joint-of-interest $p_{end}$. In a case where one contact joint is included in the subsequent frame, the information processing apparatus 100 sets the coordinates of the contact joint as the contact joint-of-interest $p_{end}$ as they are.

The information processing apparatus 100 calculates the rotation center $p_{e\_origin}$ based on Formula (5). The rotation center $p_{e\_origin}$ is a rotation center for calculating a circular orbit around the instrument. The x coordinate of the rotation center $p_{e\_origin}$ is an average of the x coordinate ($x_{start}$) of the contact joint-of-interest $p_{start}$ and the x coordinate ($x_{end}$) of the contact joint-of-interest $p_{end}$. The y coordinate and the z coordinate of the rotation center $p_{e\_origin}$ are $p_e$ on the yz plane described with reference to FIG. 7.

$$\left(\frac{x_{start} + x_{end}}{2}, y_e, z_e\right) \qquad \cdots (5)$$

The information processing apparatus 100 calculates the vector $v_{start}$ from the rotation center $p_{e\_origin}$ toward the contact joint-of-interest $p_{start}$. The information processing apparatus 100 calculates the vector $v_{end}$ from the rotation center $p_{e\_origin}$ toward the contact joint-of-interest $p_{end}$. The information processing apparatus 100 calculates a unit vector $e_{start}$ of the vector $v_{start}$ and a unit vector $e_{end}$ of the vector $v_{end}$.

Subsequently, the information processing apparatus 100 calculates an interpolation result pt that smoothly connects the contact joint-of-interest $p_{start}$ and the contact joint-of-interest $p_{end}$ by instrument-centered Slerp based on Formula (6). "s" included in Formula (6) is defined as in Formula (7). In Formula (6), an example where unit vectors are used has been described, but quaternions may be used instead of the unit vectors.

$$p_t = p_{e\_origin} + s\left\{\frac{\sin((1-t)\theta)}{\sin\theta}e_{start} + \frac{\sin(t\theta)}{\sin\theta}e_{end}\right\} \qquad \cdots (6)$$

$$s = (1 - t)|v_{start}| + t|v_{end}| \qquad \cdots (7)$$

The information processing apparatus 100 translates the whole-body position such that the positions of the joints-of-interest coincide with pt for the 3D key points in the correction section corrected according to the motion state.

The "whole-body position interpolation in the correction section based on the prediction of the motion" executed by the information processing apparatus 100 will be described. The information processing apparatus 100 predicts a motion in the correction section by executing a spline interpolation based on a plurality of frames in front of the correction section and a plurality of frames behind the correction section.

The order p of the spline interpolation is defined in advance. When the start of the correction section is denoted by s, the end of the correction section is denoted by e, and the number of frames is denoted by N, the information processing apparatus 100 outputs a result of interpolating a section (s,e) by performing a spline interpolation in the order p on the x axis, the y axis, and the z axis based on the whole-body position coordinates in sections (s-N,s-1) and "e+1,e+N".

FIG. 9 is a diagram illustrating an example of a motion prediction result. In the graph of FIG. 9, the horizontal axis corresponds to a frame number, and the vertical axis corresponds to a coordinate value (whole-body position coordinates). In FIG. 9, a plot of an area a1-1 corresponds to whole-body position coordinates in the section (s-N,s-1). A plot of an area a1-2 corresponds to whole-body position coordinates in the section "e+1,e+N". A plot of an area a1-3 corresponds to whole-body position coordinates in the section (s,e) as an interpolation result.

The information processing apparatus 100 adjusts the 3D key points in the correction section corrected according to the motion state, based on the whole-body position coordinates in the section (s,e). For example, the information processing apparatus 100 translates the whole-body position such that the center between the 3D key points in the correction section coincides with the center between the whole-body position coordinates.

Next, an example of processing in which the information processing apparatus 100 calculates the first abnormality detection threshold $Th_1$ and the second abnormality detection threshold $Th_2$ used when setting the correction section in the 3D key point sequence will be described. The information processing apparatus 100 acquires a plurality of normal 3D key points and a plurality of abnormal 3D key points in advance. The information processing apparatus 100 calculates a value of an "abnormal feature" for each of the plurality of normal 3D key points and the plurality of abnormal 3D key points. In the following description, the value of the abnormal feature will be simply referred to as an abnormal feature.

The information processing apparatus 100 calculates a "$3\sigma$ threshold" based on the plurality of normal 3D key points in order to calculate an abnormal feature. The $3\sigma$ threshold is set for the length of each bone between the joints of the human body model. Here, as an example, the length of the bone connecting the joint ar8 and the joint ar9 of the human body model illustrated in FIG. 1 is defined as "18-9", and processing of calculating a $3\sigma$ threshold set for the bone length 18-9 will be described.

The information processing apparatus 100 acquires bone lengths 18-9 from the plurality of normal 3D key points, and calculates a variance $\sigma^2$ of the bone lengths 18-9. The information processing apparatus 100 calculates $\sigma$ for the bone length 18-9 by taking the root with respect to the variance $\sigma^2$ of the bone lengths 18-9. The information processing apparatus 100 calculates $3\sigma$ by multiplying $\sigma$ by 3. As a result, the information processing apparatus 100 calculates the $3\sigma$ threshold for the bone length 18-9.

The information processing apparatus 100 calculates a $3\sigma$ threshold for a length of a bone between other joints by executing the above-described processing for the length of the bone between the other joints of the human body model as well. As a result, the $3\sigma$ threshold corresponding to the length of each bone is obtained.

The information processing apparatus 100 specifies a length of each bone in a 3D key point, calculates a difference (a difference between absolute values) between the length of the bone and the $3\sigma$ threshold corresponding to the length of the bone for the length of each bone, and calculates the sum of the differences as an abnormal feature of the 3D key point.

The information processing apparatus 100 calculates an abnormal feature for each of the plurality of normal 3D key points and the plurality of abnormal 3D key points acquired in advance.

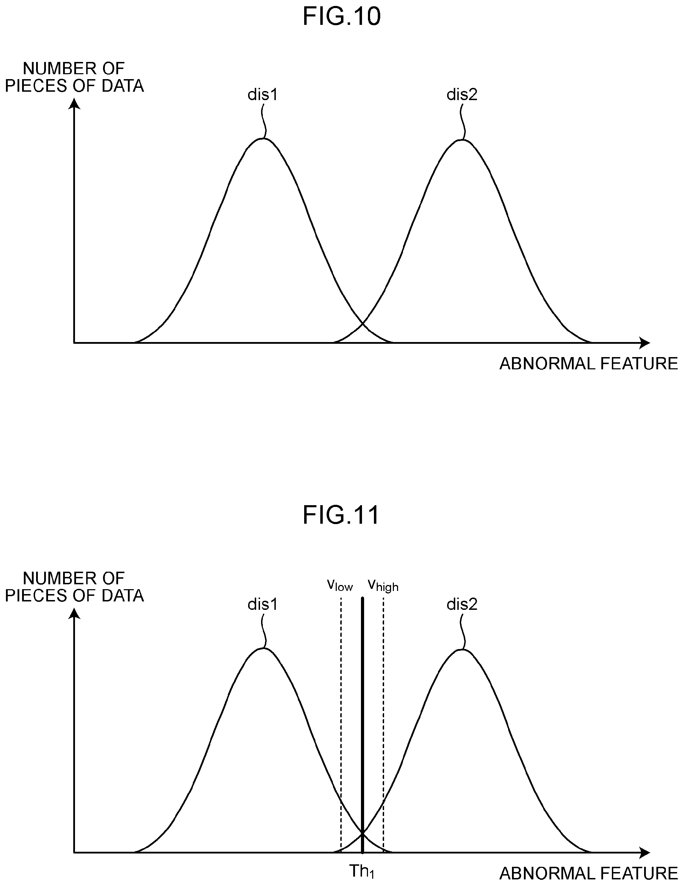

FIG. 10 is a diagram illustrating an example of a distribution of 3D key points regarding an abnormal feature. In the graph in FIG. 10, the horizontal axis corresponds to an abnormal feature, and the vertical axis corresponds to the number of pieces of 3D key point data. In FIG. 10, dis1 is a distribution of normal 3D key points. dis2 is a distribution of abnormal 3D key points.

FIG. 11 is a diagram for explaining processing of calculating a first abnormality detection threshold. The information processing apparatus 100 calculates, as a first abnormality detection threshold $Th_1$, a boundary value at which the degree of separation between the distribution dis1 of normal 3D key points and the distribution dis2 of abnormal 3D key points is maximum. For example, the information processing apparatus 100 calculates the first abnormality detection threshold $Th_1$ by executing the following processing.

The information processing apparatus 100 calculates $V_{normal}$ based on Formula (8). $\mu_{normal}$ included in Formula (8) denotes an average value of the abnormal features of the normal 3D key points. $\sigma_{normal}$ is a value obtained by taking the root with respect to the variance of the abnormal features of the normal 3D key points.

$$v_{normal} = \mu_{normal} + 3\sigma_{normal} \qquad \cdots (8)$$

The information processing apparatus 100 calculates $V_{anormal}$ based on Formula (9). $\mu_{anormal}$ included in Formula (9) denotes an average value of the abnormal features of the abnormal 3D key points. $\sigma_{anormal}$ is a value obtained by taking the root with respect to the variance of the abnormal features of the abnormal 3D key points.

$$v_{anomaly} = \mu_{anomaly} - 3\sigma_{anomaly} \qquad \cdots (9)$$

The information processing apparatus 100 specifies a search range ($v_{low}$, $v_{high}$) based on Formula (10). It is assumed that the search range ($v_{low}$, $v_{high}$) is a range in which it is highly likely that the degree of separation between the distribution dis1 of normal 3D key points and the distribution dis2 of abnormal 3D key points is maximum.

$$[v_{low}, v_{high}] = \begin{cases} [v_{normal}, v_{anomaly}] & \text{if } v_{normal} < v_{anomaly} \\ [v_{anomaly}, v_{normal}] & \text{if } v_{normal} \geq v_{anomaly} \end{cases} \qquad \cdots (10)$$

The information processing apparatus 100 calculates a value at which the degree of separation is maximum in the search range ($v_{low}$, $v_{high}$) as the first abnormality detection threshold $Th_1$. The information processing apparatus 100 may specify a value at which the degree of separation is maximum in the search range ($v_{low}$, $v_{high}$), based on a literature "N. Otsu, "A threshold selection method from graylevel histograms", IEEE Trans. Syst. Man Cybern., vol. 9, no. 1, pp. 62-66, 1979". Note that the information processing apparatus 100 sets an abnormal feature at a position where the distribution dis1 and the distribution dis2 intersect in the search range ($v_{low}$, $v_{high}$) as the first abnormality detection threshold $Th_1$.

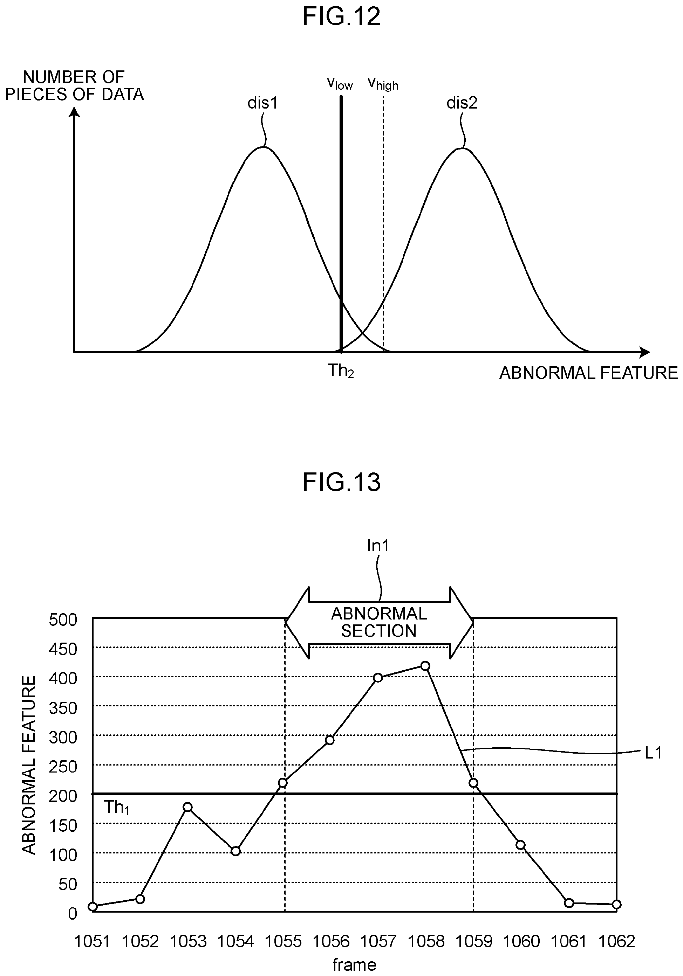

FIG. 12 is a diagram for explaining processing of calculating a second abnormality detection threshold. In order to set a threshold having a higher sensitivity than the first abnormality detection threshold $Th_1$, the information processing apparatus 100 sets the start $v_{low}$ of the search range ($v_{low}$, $v_{high}$) as the second abnormality detection threshold $Th_2$.

By executing the above-described processing, the information processing apparatus 100 calculates the first abnormality detection threshold $Th_1$ and the second abnormality detection threshold $Th_2$.

Note that, although the information processing apparatus 100 sets the start $v_{low}$ of the search range ($v_{low}$, $v_{high}$) as the second abnormality detection threshold $Th_2$ as an example in the present embodiment, the end $v_{high}$ may be set as the second abnormality detection threshold $Th_2$. In this way, when the end $v_{high}$ is set, a threshold having a lower sensitivity than the first abnormality detection threshold $Th_1$ is set.

Next, processing in which the information processing apparatus 100 specifies a correction section in a 3D key point sequence based on the first abnormality detection threshold $Th_1$ and the second abnormality detection threshold $Th_2$ will be described. When setting a correction section, the information processing apparatus 100 executes first abnormality detection and second abnormality detection.

The first abnormality detection executed by the information processing apparatus 100 will be described. FIG. 13 is a diagram for explaining first abnormality detection. In the graph of FIG. 13, the vertical axis corresponds to an abnormal distance, and the horizontal axis corresponds to a frame number of the 3D key point sequence.

The information processing apparatus 100 selects a 3D key point with a frame number n included in the 3D key point sequence. The information processing apparatus 100 specifies a length of each bone at the selected 3D key point, calculates a difference (a difference between absolute values) between the length of the bone and the $3\sigma$ threshold corresponding to the length of the bone with respect to the length of each bone, and calculates the sum of the differences as an abnormal feature of the 3D key point. The $3\sigma$ threshold is set in advance by the above-described processing.

The information processing apparatus 100 specifies a relationship between the frame number and the abnormal feature of the 3D key point by repeatedly executing the above-described processing for the 3D key point of each frame number of the 3D key point sequence. In the example illustrated in FIG. 13, the relationship between the frame number of each 3D key point included in the 3D key point sequence and the abnormal feature is indicated by a line L1.

The information processing apparatus 100 compares the line L1 with the first abnormality detection threshold $Th_1$, and specifies a section in which abnormal features are larger than or equal to the first abnormality detection threshold $Th_1$ as an abnormal section In1. In the example illustrated in FIG. 13, the frame number of the previous frame with respect to the abnormal section In1 is "1054", and the frame number of the subsequent frame with respect to the abnormal section In1 is "1060".

Note that, even in the section in which abnormal features are larger than or equal to the first abnormality detection threshold $Th_1$, the information processing apparatus 100 may exclude a portion in which the number of frames in the section is smaller than a predetermined number of frames from the abnormal section.

The second abnormality detection executed by the information processing apparatus 100 will be described. The previous frame with respect to the abnormal section is denoted by "s", and the subsequent frame with respect to the abnormal section is denoted by "e". The abnormal feature of the previous frame s is denoted by "$f_s$". The abnormal feature of the previous frame e is denoted by "$f_e$". The number of frames in the abnormal section is denoted by "N". The information processing apparatus 100 optimizes the abnormal section by setting a first convergence condition or a second convergence condition. The initial value of the abnormal section is the abnormal section In1 detected by the first abnormality detection described above.

First, processing in which the information processing apparatus 100 optimizes the abnormal section by setting the first convergence condition will be described. The first convergence condition is as follows. $Th_2$ is a second abnormality detection threshold $Th_2$.

$$f_s < Th_2 \text{ and } f_e < Th_2 \qquad \text{(first convergence condition)}$$

The information processing apparatus 100 compares $f_s$ and $f_e$, updates the frame having a larger abnormal feature, and advances the step. For example, when $f_s$ is larger than $f_e$, the information processing apparatus 100 sets a frame having a frame number obtained by subtracting 1 from the frame number of the previous frame s as a new previous frame. When $f_s$ is smaller than $f_e$, the information processing apparatus 100 sets a frame having a frame number obtained by adding 1 to the frame number of the subsequent frame e as a new subsequent frame e.

The information processing apparatus 100 repeatedly executes the step of calculating $f_s$ or $f_e$ again for the new previous frame s or the new subsequent frame e until the first convergence condition (alternatively, the second convergence condition) is satisfied. The information processing apparatus 100 adopts a previous frame s and a subsequent frame e with which an evaluation value $E = f_s + f_e$ is minimum, and updates the abnormal section.

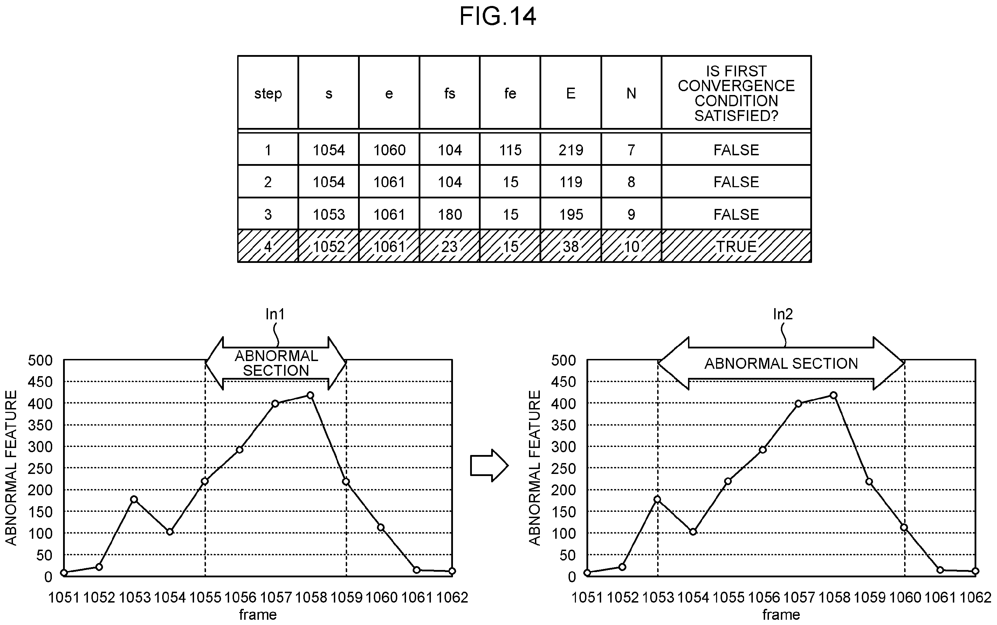

FIG. 14 is a diagram illustrating an example in which an abnormal section is optimized based on a first convergence condition. The information processing apparatus 100 executes processing including steps 1 to 4 to be described later.

Step 1 will be described. The information processing apparatus 100 sets a frame number of a previous frame and a frame number of a subsequent frame based on the abnormal section specified by the first abnormality detection. Here, the explanation will be given, assuming that the frame number of the previous frame s is "1054", and the frame number of the subsequent frame e is "1060". The abnormal feature $f_s$ of the previous frame s is set to "104". The abnormal feature $f_e$ of the subsequent frame e is set to "115". The evaluation value E is "219". The number N of frames in the abnormal section is "7". $f_s$ and $f_e$ in step 1 are "FALSE" because the first convergence condition is not satisfied.

Step 2 will be described. Since $f_s$ is smaller than $f_e$, the information processing apparatus 100 updates the frame number of the subsequent frame e to "1061". The abnormal feature $f_e$ of the subsequent frame e is set to "15". The frame number and the abnormal feature $f_s$ of the previous frame s are similar to those in step 1. The evaluation value E is "119". The number N of frames in the abnormal section is "8". $f_s$ and $f_e$ in step 2 are "FALSE" because the first convergence condition is not satisfied.

Step 3 will be described. Since $f_e$ is smaller than $f_s$, the information processing apparatus 100 updates the frame number of the previous frame s to "1053". The abnormal feature $f_s$ of the previous frame s is set to "108". The frame number and the abnormal feature $f_e$ of the subsequent frame e are similar to those in step 2. The evaluation value E is "195". The number N of frames in the abnormal section is "9". $f_s$ and $f_e$ in step 3 are "FALSE" because the first convergence condition is not satisfied.

Step 4 will be described. Since $f_e$ is smaller than $f_s$, the information processing apparatus 100 updates the frame number of the previous frame s to "1052". The abnormal feature $f_s$ of the previous frame s is set to "23". The frame number and the abnormal feature $f_e$ of the subsequent frame e are similar to those in step 3. The evaluation value E is "38". The number N of frames in the abnormal section is "10". $f_s$ and $f_e$ in step 4 are "TRUE" because the first convergence condition is satisfied.

In step 4, the information processing apparatus 100 specifies a step in which the evaluation value E is minimum among the evaluation values E in steps 1 to 4 because the first convergence condition is satisfied. In the example illustrated in FIG. 14, the evaluation value "38" in step 4 is minimum. The information processing apparatus 100 sets, as an abnormal section In2, a section from the frame number "1053" of the frame immediately following the previous frame s to the frame number "1060" of the frame immediately preceding the subsequent frame e in step 4. That is, the abnormal section In1 set by the first abnormality detection is optimized to the abnormal section In2.

Next, processing in which the information processing apparatus 100 optimizes the abnormal section by setting the second convergence condition will be described. The second convergence condition is as follows.

The first convergence condition is satisfied, or $N \geq 9$ (second convergence condition)

Processing in which the information processing apparatus 100 updates the frame number of the previous frame s and the frame number of the subsequent frame e and updates $f_s$, $f_e$, and the evaluation value E until the second convergence condition is satisfied is similar to the above-described processing related to the first convergence condition.

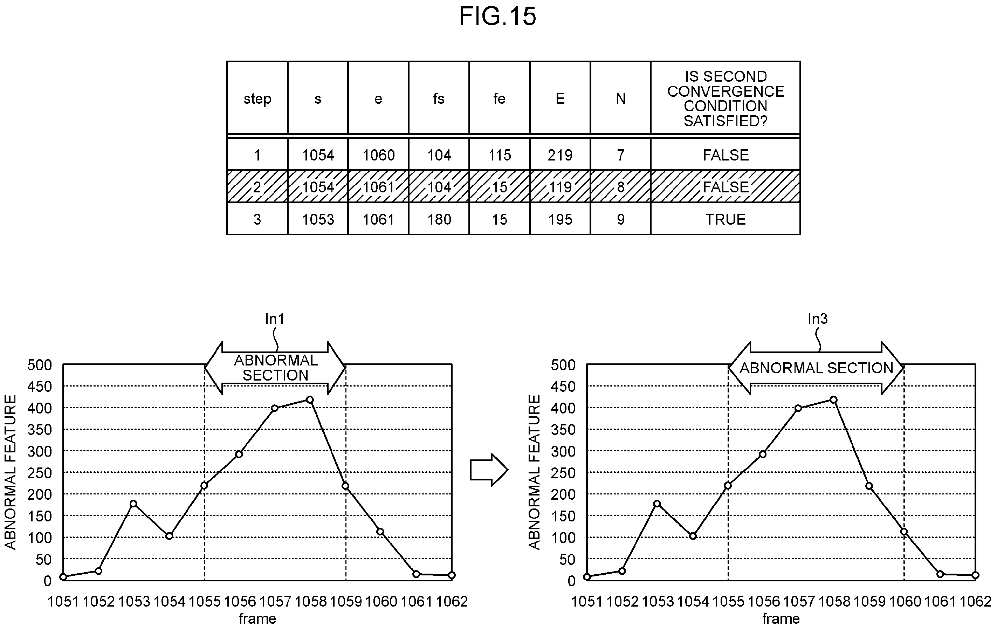

FIG. 15 is a diagram illustrating an example in which an abnormal section is optimized based on a second convergence condition. The information processing apparatus 100 executes processing including steps 1 to 3 to be described later.

Step 1 will be described. The information processing apparatus 100 sets a frame number of a previous frame and a frame number of a subsequent frame based on the abnormal section specified by the first abnormality detection. Here, the explanation will be given, assuming that the frame number of the previous frame s is "1054", and the frame number of the subsequent frame e is "1060". The abnormal feature $f_s$ of the previous frame s is set to "104". The abnormal feature $f_e$ of the subsequent frame e is set to "115". The evaluation value E is "219". The number N of frames in the abnormal section is "7". $f_s$ and $f_e$ in step 1 are "FALSE" because the first convergence condition is not satisfied.

Step 2 will be described. Since $f_s$ is smaller than $f_e$, the information processing apparatus 100 updates the frame number of the subsequent frame e to "1061". The abnormal feature $f_e$ of the subsequent frame e is set to "15". The frame number and the abnormal feature $f_s$ of the previous frame s are similar to those in step 1. The evaluation value E is "119". The number N of frames in the abnormal section is "8". $f_s$ and $f_e$ in step 2 are "FALSE" because the first convergence condition is not satisfied.

Step 3 will be described. Since $f_e$ is smaller than $f_s$, the information processing apparatus 100 updates the frame number of the previous frame s to "1053". The abnormal feature $f_s$ of the previous frame s is set to "108". The frame number and the abnormal feature $f_e$ of the subsequent frame e are similar to those in step 2. The evaluation value E is "195". The number N of frames in the abnormal section is "9". N in step 3 is "TURE" because the second convergence condition is satisfied.

In step 3, the information processing apparatus 100 specifies a step in which the evaluation value E is minimum among the evaluation values E in steps 1 to 3 because the second convergence condition is satisfied. In the example illustrated in FIG. 15, the evaluation value "119" in step 2 is minimum. The information processing apparatus 100 sets, as an abnormal section In3, a section from the frame number "1055" of the frame immediately following the previous frame s to the frame number "1060" of the frame immediately preceding the subsequent frame e in step 2. That is, the abnormal section In1 set by the first abnormality detection is optimized to the abnormal section In3.

The information processing apparatus 100 specifies the optimized abnormal section as a correction section in the 3D key point sequence.

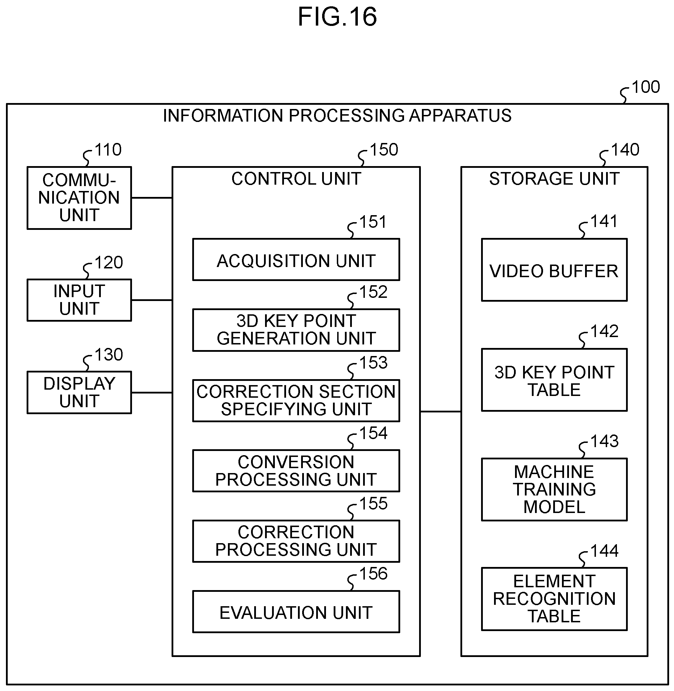

Next, an example of a configuration of the information processing apparatus 100 that executes the processing described above with reference to FIGS. 4 to 15 will be described. FIG. 16 is a functional block diagram illustrating a configuration of an information processing apparatus according to the present embodiment. As illustrated in FIG. 16, the information processing apparatus 100 includes a communication unit 110, an input unit 120, a display unit 130, a storage unit 140, and a control unit 150.

The communication unit 110 executes data communication with the camera 30, an external device, and the like via a network. The communication unit 110 is a network interface card (NIC) or the like. The control unit 150 to be described later exchanges data with an external device via the communication unit 110.

The input unit 120 is an input device that inputs various types of information to the control unit 150 of the information processing apparatus 100. For example, the input unit 120 corresponds to a keyboard, a mouse, a touch panel, or the like.

The display unit 130 is a display device that displays information output from the control unit 150.

The storage unit 140 includes a video buffer 141, a 3D key point table 142, a machine training model 143, and an element recognition table 144. The storage unit 140 is a storage device such as a memory.

The video buffer 141 is a buffer that stores video data acquired from the camera 30. The video data includes time-series image frames, and frame numbers are assigned to the image frames in ascending order.

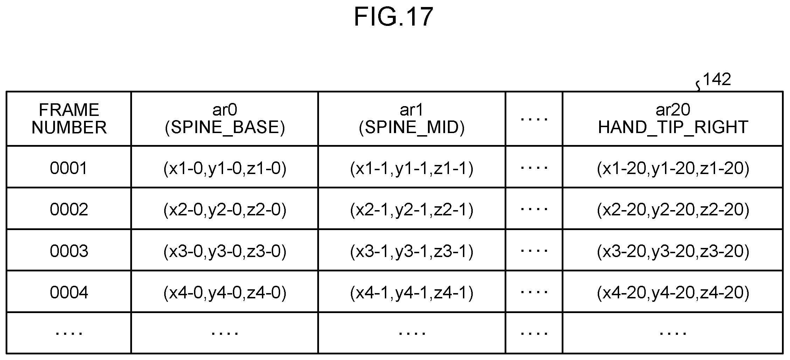

The 3D key point table 142 is a table that holds information regarding 3D key points. FIG. 17 is a diagram illustrating an example of a data structure of a 3D key point table. As illustrated in FIG. 17, the 3D key point table 142 holds frame numbers and three-dimensional coordinates corresponding to joints (joint identification information) in association with each other.

The frame number is a frame number for identifying an image frame used when generating 3D key points. The identification information of each joint is information for uniquely specifying a joint. In the description with reference to FIG. 17, the joints ar0 to ar20 are used as identification information of the joints. For example, the joint ar0 corresponds to "SPINE_BASE". The joint ar1 corresponds to "SPINE_MID". The joint ar20 corresponds to "HAND_TIP_RIGHT". The relationship between the other joints and the joint names is illustrated in FIG. 2.

The three-dimensional coordinates of the joints ar0 to ar20 corresponding to a certain frame number (e.g., 0001) in the 3D key point table 142 are 3D key points corresponding to the certain frame number (e.g., 0001).

The machine training model 143 is used in a case where the above-described "interpolation by machine training model" is performed. The machine training model 143 is a model to which a previous frame and a subsequent frame are input and from which a path of coordinates of joints from the previous frame to the subsequent frame is output.

The element recognition table 144 is a table that associates time-series changes in position of joints included in the time-series 3D key points with element types. In addition, the element recognition table 144 associates a combination of element types with a score. The score is calculated by a sum of a difficulty (D) score and an execution (E) score. For example, the D score is a score calculated based on the difficulty level of the element. The E score is a score calculated by the deduction method according to the degree of perfection of the element.

The control unit 150 includes an acquisition unit 151, a 3D key point generation unit 152, a correction section specifying unit 153, a conversion processing unit 154, a correction processing unit 155, and an evaluation unit 156. The control unit 150 is a central processing unit (CPU), a graphics processing unit (GPU), or the like.

The acquisition unit 151 acquires video data from the camera 30 via the network. The acquisition unit 151 stores the acquired video data in the video buffer 141.

The 3D key point generation unit 152 generates time-series 3D key points based on the video data (time-series image frames) stored in the video buffer 141, and stores the generated 3D key points in the 3D key point table 142.

For example, the processing in which the 3D key point generation unit 152 generates 3D key points from the image frames is similar to that described with reference to FIG. 33. That is, the 3D key point generation unit 152 first generates 2D key points by inputting the image frames to the trained training model, and generates 3D key points by integrating the 2D key points.

The correction section specifying unit 153 executes processing of calculating a first abnormality detection threshold $Th_1$ and a second abnormality detection threshold $Th_2$. The correction section specifying unit 153 performs first abnormality detection using the first abnormality detection threshold $Th_1$. The correction section specifying unit 153 performs second abnormality detection using the second abnormality detection threshold $Th_2$.

The processing in which the correction section specifying unit 153 calculates the first abnormality detection threshold $Th_1$ is similar to the processing described above with reference to FIG. 11. The processing in which the correction section specifying unit 153 calculates the second abnormality detection threshold $Th_2$ is similar to the processing described above with reference to FIG. 12.

The first abnormality detection executed by the correction section specifying unit 153 is similar to the processing described with reference to FIG. 13. The second abnormality detection executed by the correction section specifying unit 153 is similar to the processing described with reference to FIG. 14 or the processing described with reference to FIG. 15.

The correction section specifying unit 153 executes the above-described processing to set a correction section in the 3D key point sequence. The correction section specifying unit 153 outputs information on the correction section set in the 3D key point sequence to the correction processing unit 155.

The conversion processing unit 154 converts the coordinates of the joints in the 3D key points into data on a whole-body position, a whole-body rotation, and each joint rotation. The conversion processing unit 154 outputs a conversion result to the correction processing unit 155. For example, the whole-body position refers to positions of all the 3D key points relative to the reference posture. The whole-body rotation refers to rotation angles of all the 3D key points relative to the reference posture. Each joint rotation refers to a rotation angle of each of the joints in the 3D key points relative to each joint in the reference posture.

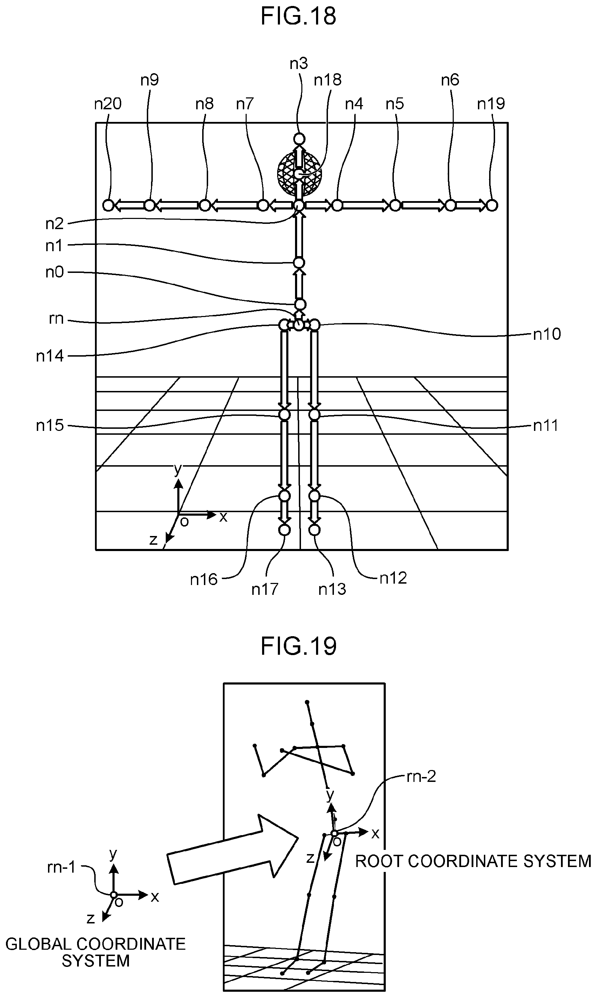

FIG. 18 is a diagram illustrating an example of a reference posture. In the example illustrated in FIG. 18, the reference posture is indicated by nodes rn and n0 to n20. The node rn is a root. The "root" indicates a node of a reference joint of the human body. The nodes n0 to n2, n4 to n12, n14 to n16, and n18 are joints. The "joint" indicates a node of a joint. The nodes n3, n13, n17, n19, and n20 are ends. The "end" indicates a node of a distal end portion such as a tip of a hand or a foot. A "joint direction vector" is set from a superordinate node to a subordinate node among adjacent nodes. The joint direction vector of the node in the reference posture is defined as an "offset".

FIG. 19 is a diagram for explaining an example of a three-dimensional rotation angle of a root. For example, the three-dimensional rotation angle of the root is an Euler angle ($\theta x, \theta y, \theta z$) for converting a node rn-1 of the root in the global coordinate system into a node rn-2 of the root in the root coordinate system.

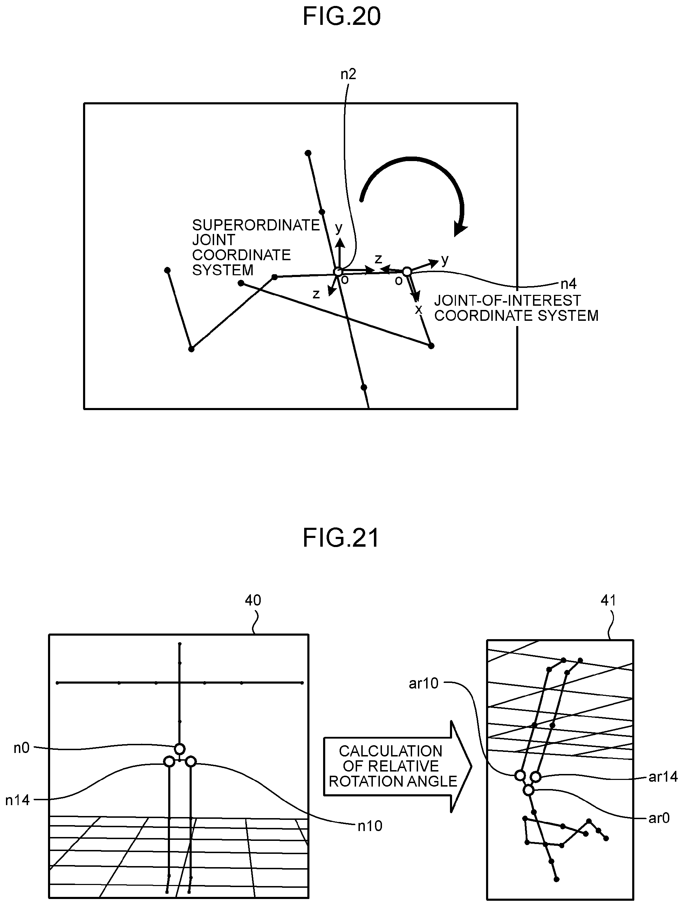

FIG. 20 is a diagram for explaining an example of a three-dimensional rotation angle of a joint. For example, the three-dimensional rotation angle of the joint is an Euler angle ($\theta x, \theta y, \theta z$) for conversion from the superordinate joint coordinate system to the joint-of-interest coordinate system. For example, assuming that the joint-of-interest is a node n4, the superordinate node to the node n4 is a node n2. In this case, the superordinate joint coordinate system is a coordinate system of the node n2. The joint-of-interest coordinate system is a coordinate system of the node n4.

Here, since the 3D key points are three-dimensional coordinate data and there is no information about a root and joints, it is not possible to obtain a three-dimensional rotation angle of the root and a three-dimensional rotation angle of each of the joints simply from the 3D key points. For example, the conversion processing unit 154 obtains a three-dimensional rotation angle of the root and a three-dimensional rotation angle of each of the joints from the 3D key points based on the prior art such as inverse kinematics.

Note that, as will be described below, the conversion processing unit 154 may calculate a three-dimensional rotation angle of a root by the rigid body alignment, and calculate a three-dimensional rotation angle of a joint by the Rodrigues' rotation formula.

An example of processing in which the conversion processing unit 154 calculates a three-dimensional rotation angle of a root by the rigid body alignment will be described. FIG. 21 is a diagram for explaining processing of calculating a three-dimensional rotation angle of a root by the rigid body alignment. The conversion processing unit 154 divides each node of hierarchical structure data (data of the reference posture) into three or more rigid joint nodes and other nodes according to a predefinition. As described with reference to FIG. 18, the nodes in the reference posture are nodes rn and n0 to n20. In the example illustrated in FIG. 21, the conversion processing unit 154 selects the nodes n0, n10, and n14 as the rigid joint nodes among the nodes included in a reference posture 40.

The conversion processing unit 154 specifies a joint group corresponding to the rigid joint nodes (nodes n0, n10, and n14) from among joints included in 3D key points 41. In the example illustrated in FIG. 21, the joint group corresponding to the rigid joint nodes includes joints ar0, ar10, and ar14. In the following description, the joint group corresponding to the rigid joint nodes among the joints included in 3D key points will be referred to as "rigid body corresponding joints".

The conversion processing unit 154 calculates a relative rotation angle from the rigid joint nodes (nodes n0, n10, and n14) to the rigid body corresponding joints (joints ar0, ar10, and ar14) by rigid body alignment to obtain a three-dimensional rotation angle of the root.

The rigid body alignment is a method of obtaining conversion parameters for aligning a source of a combination of three or more points with a target of a combination of three or more points by the least squares method according to Formula (11) from the source and the target. The conversion parameters include a rotation matrix R, a translation t, and a scale **c.** In the present embodiment, the rotation matrix R is converted into an Euler angle for use as a three-dimensional rotation angle of the root.

$$e^2(R, t, c) = \frac{1}{n}\sum_{i=1}^{n}\|y_i - (cRx_i + t)\|^2 \qquad \cdots (11)$$

In Formula (11), "x" denotes coordinates of the source of three or more points. The coordinates of source are three-dimensional coordinates of the rigid joint. "y" denotes coordinates of the target of three or more points. The coordinates of target are three-dimensional coordinates of the rigid body corresponding joint. The conversion processing unit 154 obtains a rotation matrix R, a translation t, and a scale c that minimize $e^2$ in Formula (11).

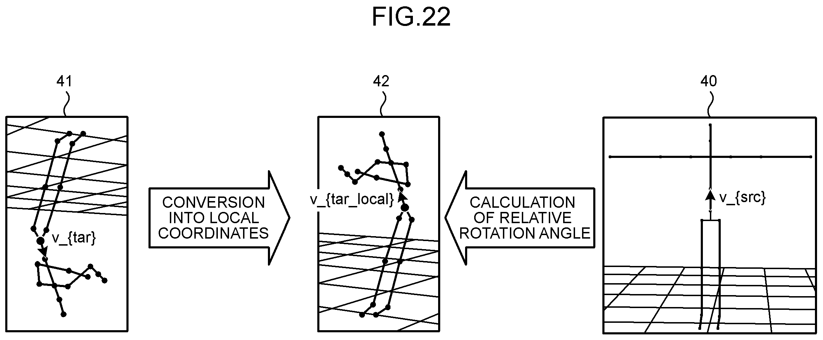

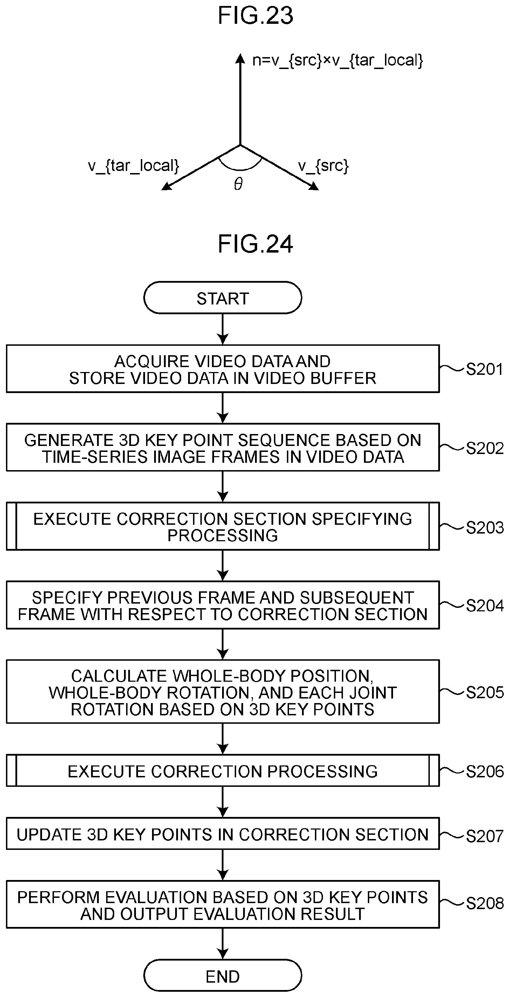

Next, an example of processing in which the conversion processing unit 154 calculates a three-dimensional rotation angle of a joint by the Rodrigues' rotation formula will be described. FIGS. 22 and 23 are diagrams for explaining processing of calculating a three-dimensional rotation angle of a joint by the Rodrigues' rotation formula. First, FIG. 22 will be described. The conversion processing unit 154 converts a joint direction vector of a joint-of-interest in the 3D key point 41 into a joint direction vector in the local coordinate system. The joint direction vector of the 3D key point 41 is a vector from a subordinate joint to a superordinate joint among adjacent joints.

In the example illustrated in FIG. 22, the explanation will be given, assuming that the joint-of-interest is a joint ar0. The joint direction vector v_{tar} of the joint ar0 is a vector from the subordinate joint ar0 toward the superordinate joint ar1.

The conversion processing unit 154 multiplies the joint direction vector of the joint-of-interest by the inverse matrix ($R^{-1}$) of the rotation matrix R obtained by Formula (11) for conversion into a joint direction vector in the local coordinate system. For example, by multiplying the joint direction vector v_{tar} of the joint-of-interest by $R^{-1}$, a joint direction vector v_{tar_local} in the local coordinate system is obtained. The conversion processing unit 154 obtains 3D key points 42 in the local coordinate system by repeatedly executing the above-described processing for each of the joints in the 3D key points 41.

Subsequently, the conversion processing unit 154 specifies an angle θ formed by the joint direction vector of the 3D key point 42 and the joint direction vector of the reference posture 40 with a normal line between the joint direction vector of the 3D key point 42 and the joint direction vector of the reference posture 40 as a rotation axis. Here, as an example, the explanation will be given using the joint direction vector v_{tar_local} of the 3D key point 42 and the joint direction vector v_{src} of the reference posture 40. The joint direction vector v_{src} is a vector from the node n0 toward the node n1 in the reference posture.

The description of FIG. 23 will be made. In FIG. 23, n is a normal line between the joint direction vector v_{tar_local} and the joint direction vector v_{src} of the reference posture 40. The conversion processing unit 154 specifies the normal line n by an outer product of the joint direction vector v_{tar_local} and the joint direction vector v_{src}. The conversion processing unit 154 specifies an angle θ formed by the joint direction vector v_{tar_local} and the joint direction vector v_{src} with the normal line n as a rotation axis.

The conversion processing unit 154 calculates a relative rotation angle by the Rodrigues' rotation formula with the normal line n as a rotation axis and the formed angle θ as a rotation angle, and use the calculated relative rotation angle as a three-dimensional rotation angle of the joint.

The Rodrigues' rotation formula is a formula for calculating a rotation matrix R from the rotation axis (normal line n) and the rotation angle (formed angle θ) specified by source and target of the joint direction vector according to Formula (12). The source of the joint direction vector is the joint direction vector (v_{src}) of the reference posture 40. The target of the joint direction vector is a joint direction vector (v{tar_local}) of the 3D key point 42 in the local coordinate system.

$$R_n(\theta) = \cos\theta I + (1 - \cos\theta)\, n^t n + \sin\theta\, [n]_\times \qquad \cdots (12)$$

The conversion processing unit 154 converts $R_n(\theta)$ obtained by Formula (12) into an Euler angle for use as a three-dimensional rotation angle of the joint.

As described above, the conversion processing unit 154 converts the coordinates of each joint in the 3D key point into data on a whole-body rotation and each joint rotation by calculating a relative rotation angle from the reference posture to the 3D key point. Note that the conversion processing unit 154 calculates positions of all the 3D key points relative to the reference posture as a whole-body position. The conversion processing unit 154 outputs a conversion result to the correction processing unit 155.

Referring back to FIG. 16, the explanation will be given. The correction processing unit 155 determines a motion state of the person U4 based on the previous frame and the subsequent frame with respect to the correction section set in the 3D key point sequence. The processing in which the correction processing unit 155 determines the motion state of the person U4 corresponds to the above-described "long-term motion determination", "stationary determination", "circular motion determination", and "circular motion direction determination".

The correction processing unit 155 corrects the 3D key points in the correction section based on the determination result as to the motion state. The information processing apparatus 100 selects one of an interpolation by Slerp (short path), an interpolation by Slerp (long path), and an interpolation by machine training model from the determination result as to the motion state according to the processing procedure described with reference to FIG. 6, and performs correction. The interpolation by Slerp (short path), the interpolation by Slerp (long path), and the interpolation by machine training model executed by the correction processing unit 155, are similar to those described above.

After performing the correction corresponding to the above-described motion state, the correction processing unit 155 performs an "instrument contact determination" for determining whether the person U4 is in contact with an instrument. The instrument contact determination executed by the correction processing unit 155 is similar to the processing described with reference to FIG. 7.

When it is determined by the instrument contact determination that the person U4 is in contact with the instrument, the correction processing unit 155 performs a "whole-body position interpolation in the correction section based on the contact with the instrument". On the other hand, when it is determined by the instrument contact determination that the person U4 is not in contact with the instrument, the correction processing unit 155 performs a "whole-body position correction based on the prediction of the motion".

The "whole-body position interpolation in the correction section based on the contact with the instrument" executed by the correction processing unit 155 is similar to the processing described above with reference to FIG. 8.

The "whole-body position correction based on the prediction of the motion" executed by the correction processing unit 155 is similar to the processing described above with reference to FIG. 9.

The correction processing unit 155 updates the 3D key points in the correction section stored in the 3D key point table 142 based on the correction result.

The evaluation unit 156 is a processing unit that evaluates the performance of the person U4 based on the time-series 3D key points stored in the 3D key point table 142 and the element recognition table 144. For example, the evaluation unit 156 compares time-series changes of each joint between the 3D key points with the element recognition table 144 to specify an element type. Furthermore, the evaluation unit 156 calculates a score of the performance of the person U4 by comparing a combination of element types with the element recognition table. The evaluation unit 156 generates screen information on the element type and the score, and displays the screen information on the display unit 130.

Next, an example of a procedure of processing of the information processing apparatus 100 according to the present embodiment will be described. FIG. 24 is a flowchart illustrating a procedure of processing of the information processing apparatus 100 according to the present embodiment. As illustrated in FIG. 24, the acquisition unit 151 of the information processing apparatus 100 acquires video data from the camera 30, and stores the acquired video data in the video buffer 141 (step S201).

The 3D key point generation unit 152 of the information processing apparatus 100 generates a 3D key point sequence based on time-series image frames in the video data (step S202). The correction section specifying unit 153 of the information processing apparatus 100 executes correction section specifying processing (step S203).

The information processing apparatus 100 specifies a previous frame and a subsequent frame with respect to the correction section (step S204). The conversion processing unit 154 of the information processing apparatus 100 calculates a whole-body position, a whole-body rotation, and each joint rotation based on the 3D key points (step S205).

The correction processing unit 155 of the information processing apparatus 100 executes correction processing (step S206). The correction processing unit 155 updates the 3D key points in the correction section (step S207). The evaluation unit 156 of the information processing apparatus 100 performs an evaluation based on the 3D key points and outputs an evaluation result to the display unit 130 (step S208).

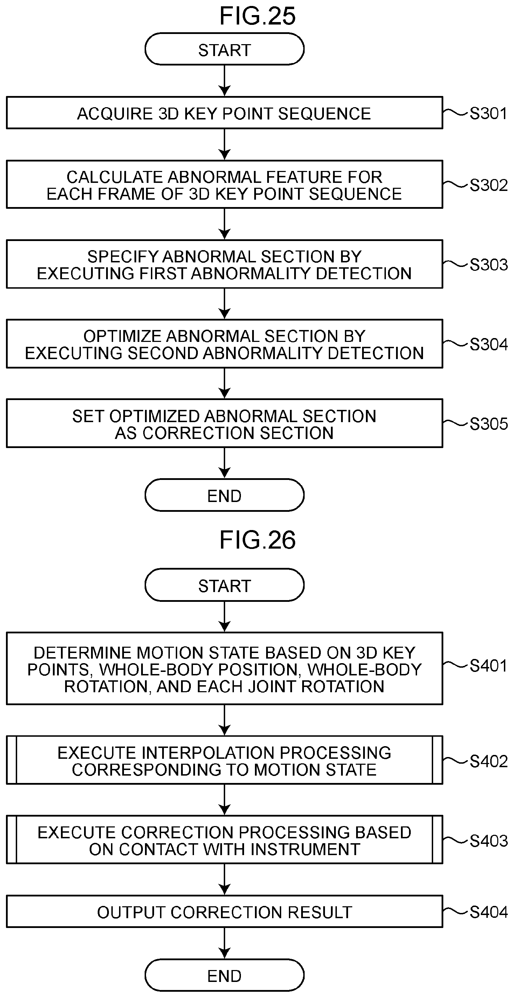

Next, a processing procedure of the correction section specifying processing described in step S203 of FIG. 24 will be described. FIG. 25 is a flowchart illustrating a processing procedure of correction section specifying processing. As illustrated in FIG. 25, the correction section specifying unit 153 of the information processing apparatus 100 acquires a 3D key point sequence (step S301).

The correction section specifying unit 153 calculates an abnormal feature for each frame of the 3D key point sequence (step S302). The correction section specifying unit 153 specifies an abnormal section by executing a first abnormality detection (step S303).

The correction section specifying unit 153 optimizes the abnormal section by executing a second abnormality detection (step S304). The correction section specifying unit 153 sets the optimized abnormal section as a correction section (step S305).

Next, a processing procedure of the correction processing illustrated in step S206 of FIG. 24 will be described. FIG. 26 is a flowchart illustrating a processing procedure of correction processing. As illustrated in FIG. 26, the correction processing unit 155 of the information processing apparatus 100 determines a motion state based on the 3D key points, the whole-body position, the whole-body rotation, and each joint rotation (step S401).

The correction processing unit 155 executes interpolation processing corresponding to the motion state (step S402). The correction processing unit 155 executes correction processing based on the contact with the instrument (step S403). The correction processing unit 155 outputs a correction result (step S404).

The processing procedure of the interpolation processing corresponding to the motion state illustrated in step S402 of FIG. 26 corresponds to the processing procedure described with reference to FIG. 6.

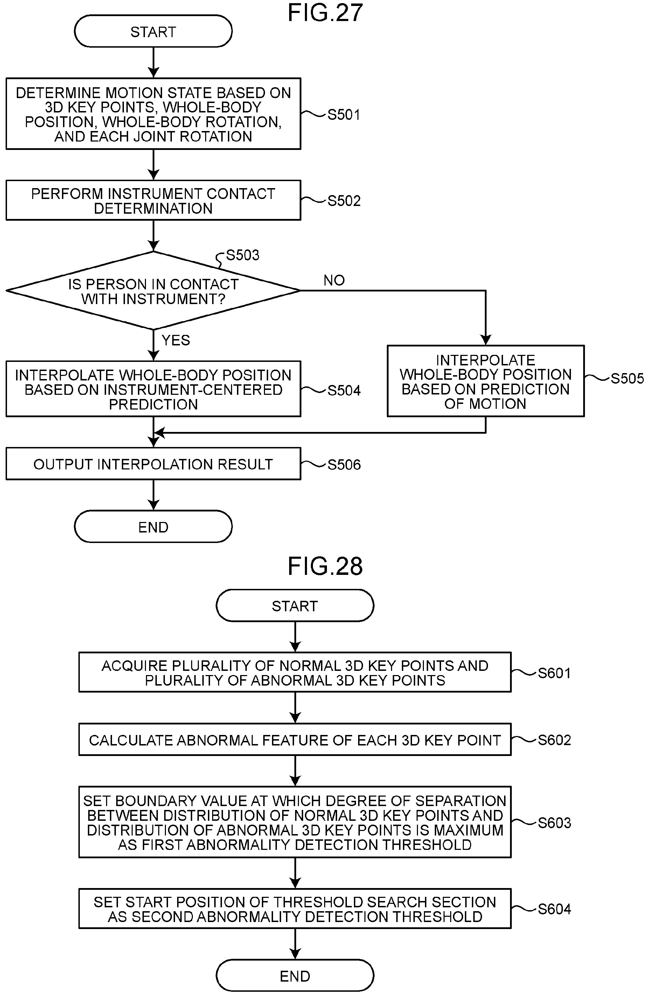

Next, a processing procedure of the correction processing based on the contact with the instrument described in step S403 of FIG. 26 will be described. FIG. 27 is a flowchart illustrating a processing procedure of correction processing based on a contact with an instrument. As illustrated in FIG. 27, the correction processing unit 155 of the information processing apparatus 100 determines a motion state based on the 3D key points, the whole-body position, the whole-body rotation, and each joint rotation (step S501).

The correction processing unit 155 performs an instrument contact determination (step S502). When a person is in contact with an instrument (step S503, Yes), the correction processing unit 155 interpolates the whole-body position based on instrument-centered prediction (step S504), and proceeds to step S506.

On the other hand, when the person is not in contact with the instrument (step S503, No), the correction processing unit 155 interpolates the whole-body position based on the prediction of the motion (step S505). The correction processing unit 155 outputs an interpolation result (step S506).

Next, an example of a processing procedure of processing in which the information processing apparatus 100 sets a first abnormality detection threshold $Th_1$ and a second abnormality detection threshold $Th_2$ will be described. FIG. 28 is a flowchart illustrating a processing procedure of threshold setting processing. As illustrated in FIG. 28, the correction section specifying unit 153 of the information processing apparatus 100 acquires a plurality of normal 3D key points and a plurality of abnormal 3D key points (step S601).

The correction section specifying unit 153 calculates an abnormal feature of each 3D key point (step S602).

The correction section specifying unit 153 sets a boundary value at which a degree of separation between a distribution of normal 3D key points and a distribution of abnormal 3D key points is maximum as a first abnormality detection threshold (step S603). The correction section specifying unit 153 sets a start position of a threshold search section as a second abnormality detection threshold (step S604).

Next, the effect of the information processing apparatus 100 according to the present embodiment will be described. The information processing apparatus 100 sets a correction section in the 3D key point sequence, and determines a motion state of the person U4 based on the 3D key points before and after the correction section. The information processing apparatus 100 determines whether the person U4 is in contact with the instrument based on the 3D key points before and after the correction section. The information processing apparatus 100 corrects the 3D key points in the correction section based on the determination results as to the motion state of the person U4 and whether the person U4 is in contact with the instrument. As a result, it is possible to improve accuracy in recognizing a skeleton of a person.

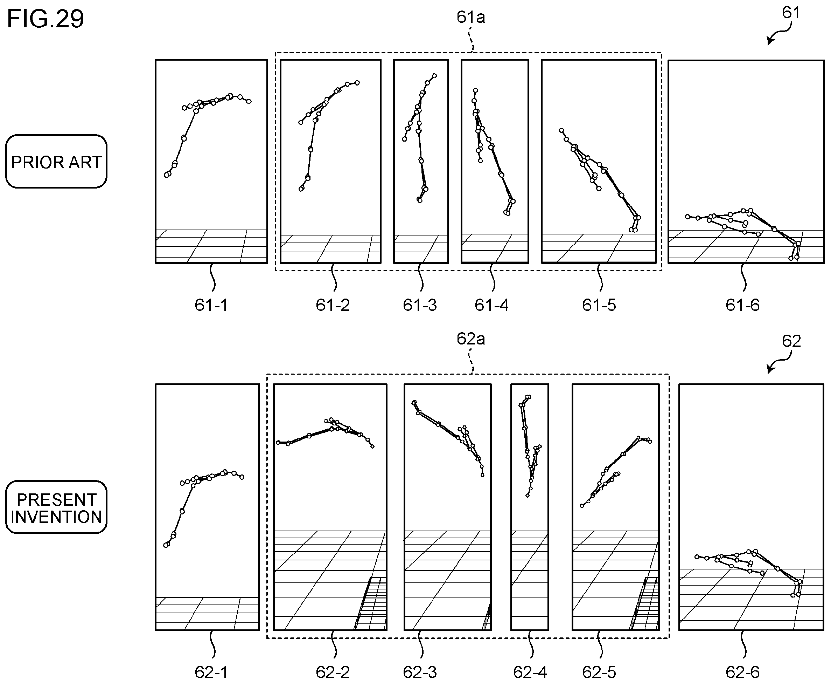

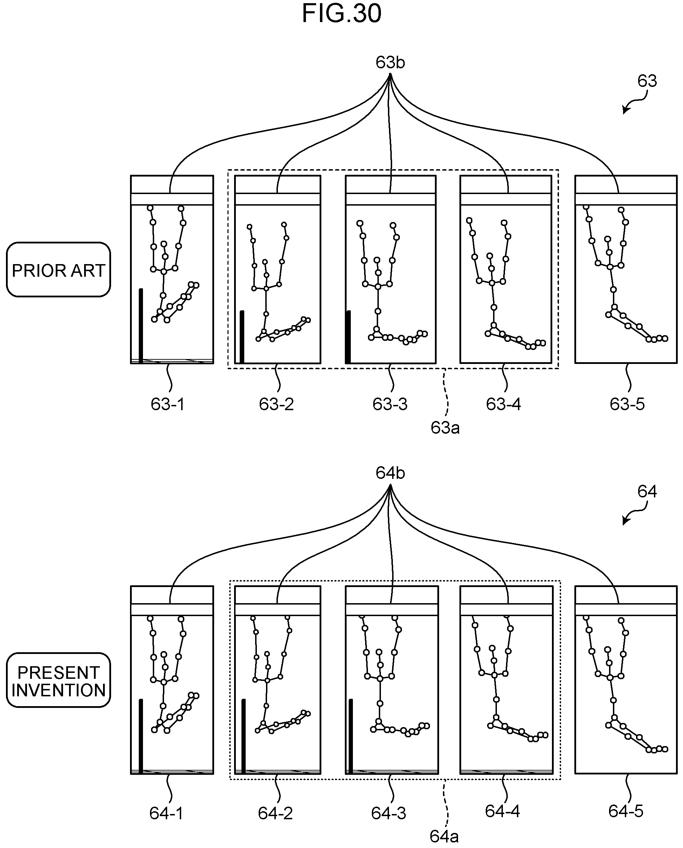

FIGS. 29 and 30 are diagrams for explaining the effect of the information processing apparatus. FIG. 29 will be described. A 3D key point sequence 61 includes frames 61-1, 61-2, 61-3, 61-4, 61-5, and 61-6. A 3D key point sequence 62 includes frames 62-1, 62-2, 62-3, 62-4, 62-5, and 62-6.

A correction section 61a of the 3D key point sequence 61 is corrected according to the prior art. In the prior art, a wrong path (short path) is selected based on the frames 61-1 and 61-6 and corrected by Slerp. Therefore, each of the frames 61-2 to 61-5 in the correction section 61a is not appropriately corrected.

On the other hand, a correction section 62a of the 3D key point sequence 62 is corrected by the information processing apparatus 100 according to the present invention. The information processing apparatus 100 selects an appropriate path (long path) based on the frames 62-1 and 62-6 for correction by Slerp, and the frames 62-2 to 62-5 of the correction section 62a are appropriately corrected.

The description of FIG. 30 will be made. A 3D key point sequence 63 includes frames 63-1, 63-2, 63-3, 63-4, and 63-5. A 3D key point sequence 64 includes frames 64-1, 64-2, 64-3, 64-4, and 64-5.

A correction section 63a of the 3D key point sequence 63 is corrected according to the prior art. In the prior art, in the correction section 63a, joint positions of a person in each of the frames 63-2 to 63-4 are away from an instrument 63b, and are not appropriately corrected.

On the other hand, a correction section 64a of the 3D key point sequence 64 is corrected by the information processing apparatus 100 according to the present invention. When a person is in contact with an instrument 64b, the information processing apparatus 100 performs a correction by instrument-centered prediction, and joint positions of the person in each of the frames 64-2 to 64-4 of the correction section 64a are in contact with the instrument 64b and are appropriately corrected.

In addition, the information processing apparatus 100 acquires a distribution of normal 3D key points and a distribution of abnormal 3D key points in advance, and specifies a first abnormality detection threshold $Th_1$ and a second abnormality detection threshold $Th_2$. The first abnormality detection threshold $Th_1$ is a boundary value at which the degree of separation between the distribution of normal 3D key points and the distribution of abnormal 3D key points is maximum. The second abnormality detection threshold $Th_2$ is a threshold having a higher sensitivity than the first abnormality detection threshold $Th_1$. The information processing apparatus 100 sets a correction section in the 3D key point sequence based on the first abnormality detection threshold $Th_1$ and the second abnormality detection threshold $Th_2$. As a result, a section in which the coordinates of the joints in the 3D key points are abnormal can be appropriately set as a correction section.

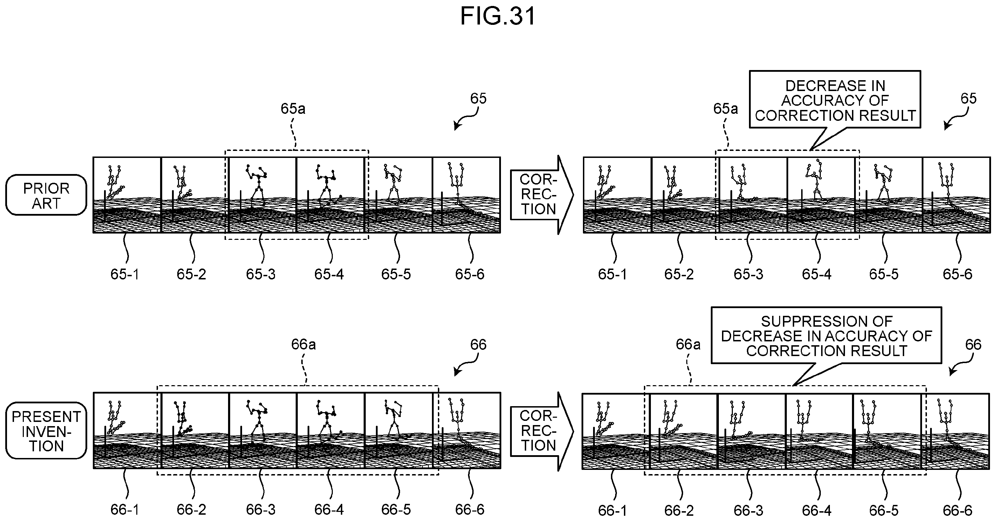

FIG. 31 is a diagram for explaining the effect of the information processing apparatus. A 3D key point sequence 65 includes frames 65-1, 65-2, 65-3, 65-4, 65-5, and 65-6. A 3D key point sequence 66 includes frames 66-1, 66-2, 66-3, 66-4, 66-5, and 66-6.

In the prior art, a correction section 65a is set in 3D key point sequence 65 by a simple threshold comparison, and the correction section 65a is corrected based on frames (frames 65-2 and 65-5) before and after the correction section 65a. Here, the frames 65-2 and 65-5 may be frames in which the abnormal features are not suppressed. If a correction is performed based on the frames 65-2 and 65-5 in which the abnormal features are not suppressed, the accuracy of the correction result decreases.

On the other hand, the information processing apparatus 100 performs two-stage abnormality detections on the 3D key point sequence 66 based on the abnormality detection threshold $Th_1$ and the second abnormality detection threshold $Th_2$ to set a correction section 66a. The frames (frames 66-1 and 66-6) before and after the correction section 66a are frames in which abnormal features are suppressed. When the information processing apparatus 100 performs a correction based on the frames 66-1 and 66-6 in which abnormal features are suppressed, it is possible to suppress a decrease in accuracy of correction result.

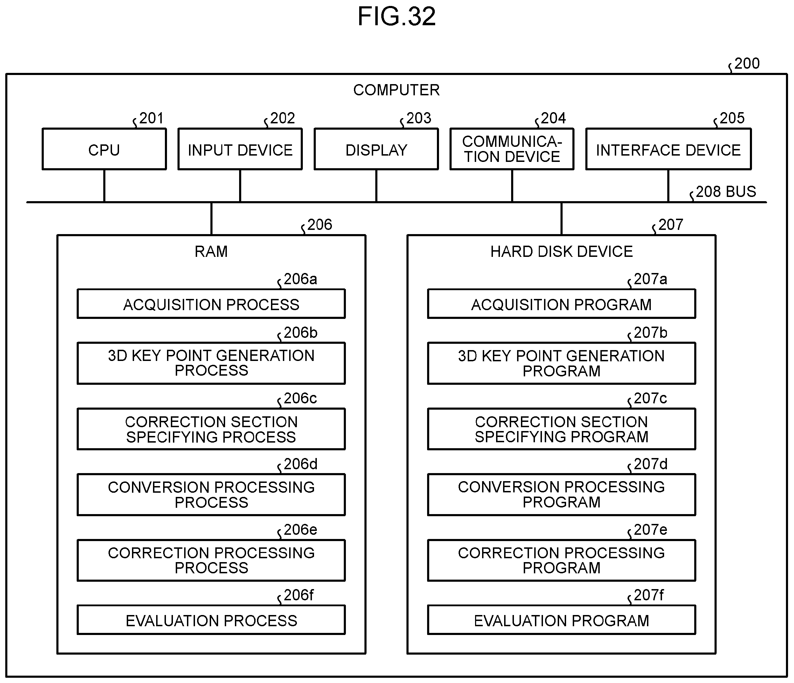

Next, an example of a hardware configuration of a computer that implements functions similar to those of the information processing apparatus 100 described above will be described. FIG. 32 is a diagram illustrating an example of a hardware configuration of a computer that implements functions similar to those of the information processing apparatus according to the embodiment.

As illustrated in FIG. 32, a computer 200 includes a CPU 201 that executes various types of arithmetic processing, an input device 202 that receives an input of data from a user, and a display 203. Furthermore, the computer 200 includes a communication device 204 that transmits and receives data to and from the camera 15, an external device, and the like via a wired or wireless network, and an interface device 205. In addition, the computer 200 includes a RAM 206 that temporarily stores various types of information and a hard disk device 207. Each of the devices 201 to 207 is connected to a bus 208.

The hard disk device 207 includes an acquisition program 207a, a 3D key point generation program 207b, a correction section specifying program 207c, a conversion processing program 207d, a correction processing program 207e, and an evaluation program 207f. In addition, the CPU 201 reads each of the programs 207a to 207f and develops the read program in the RAM 206.

The acquisition program 207a functions as an acquisition process 206a. The 3D key point generation program 207b functions as a 3D key point generation process 206b. The correction section specifying program 207c functions as a correction section specifying process 206c. The conversion processing program 207d functions as a conversion processing process 206d. The correction processing program 207e functions as a correction processing process 206e. The evaluation program 207f functions as an evaluation process 206f.

The processing of the acquisition process 206a corresponds to the processing of the acquisition unit 151. The processing of the 3D key point generation process 206b corresponds to the processing of the 3D key point generation unit 152. The processing of the correction section specifying process 206c corresponds to the processing of the correction

# EP 4 628 173 A1

section specifying unit 153. The processing of the conversion processing process 206d corresponds to the processing of the conversion processing unit 154. The processing of the correction processing process 206e corresponds to the processing of the correction processing unit 155. The processing of the evaluation process 206f corresponds to the processing of the evaluation unit 156.

Note that each of the programs 207a to 207f does not need to be stored in the hard disk device 207 from the beginning. For example, each program is stored in a "portable physical medium" such as a flexible disk (FD), a CD-ROM, a DVD, a magneto-optical disk, or an IC card inserted into the computer 200. Then, the computer 200 may read and execute each of the programs 207a to 207f.

Reference Signs List

100    INFORMATION PROCESSING APPARATUS

110    COMMUNICATION UNIT

120    INPUT UNIT

130    DISPLAY UNIT

140    STORAGE UNIT

141    VIDEO BUFFER

142    3D KEY POINT TABLE

143    MACHINE TRAINING MODEL

144    ELEMENT RECOGNITION TABLE

150    CONTROL UNIT

151    ACQUISITION UNIT

152    3D KEY POINT GENERATION UNIT

153    CORRECTION SECTION SPECIFYING UNIT

154    CONVERSION PROCESSING UNIT

155    CORRECTION PROCESSING UNIT

156    EVALUATION UNIT

## Claims

1. A correction method comprising the following processing executed by a computer:

   acquiring time-series skeleton information in which a plurality of joints included in a human body and coordinates of the plurality of joints are set respectively;
   determining a motion state in a correction section based on first skeleton information in front of the correction section and second skeleton information behind the correction section with respect to the time-series skeleton information; and
   correcting skeleton information in the correction section based on a result of determining the motion state.

2. The correction method according to claim 1, wherein

paths from coordinates of each joint in the first skeleton information to coordinates of each joint in the second skeleton information include a first path and a second path longer than the first path, and

the correction processing includes selecting the first path or the second path based on the motion state and the number of frames of the skeleton information included in the correction section, and correcting the skeleton information in the correction section based on a result of the selection.

3. The correction method according to claim 1, wherein the correction processing includes correcting the skeleton information in the correction section based on coordinates of a predetermined joint in the first skeleton information, coordinates of a predetermined joint in the second skeleton information, and coordinates of an instrument.

4. The correction method according to claim 3, wherein the correction processing includes determining whether the human body is in contact with the instrument based on the coordinates of the predetermined joint in the first skeleton information, the coordinates of the predetermined joint in the second skeleton information, and the coordinates of the instrument, and correcting the skeleton information in the correction section such that the predetermined joint in the corrected skeleton information is in contact with the instrument when the human body is in contact with the instrument.

5. A correction method comprising the following processing executed by a computer:

acquiring time-series skeleton information in which a plurality of joints included in a human body and coordinates of the plurality of joints are set respectively; and

correcting skeleton information in a correction section based on coordinates of a predetermined joint in first skeleton information in front of the correction section with respect to the time-series skeleton information, coordinates of a predetermined joint in second skeleton information behind the correction section, and coordinates of an instrument.

6. A correction program that causes a computer to execute the following processing:

acquiring time-series skeleton information in which a plurality of joints included in a human body and coordinates of the plurality of joints are set respectively;

determining a motion state in a correction section based on first skeleton information in front of the correction section and second skeleton information behind the correction section with respect to the time-series skeleton information; and

correcting skeleton information in the correction section based on a result of determining the motion state.

7. The correction program according to claim 6, wherein

paths from coordinates of each joint in the first skeleton information to coordinates of each joint in the second skeleton information include a first path and a second path longer than the first path, and

the correction processing includes selecting the first path or the second path based on the motion state and the number of frames of the skeleton information included in the correction section, and correcting the skeleton information in the correction section based on a result of the selection.

8. The correction program according to claim 6, wherein the correction processing includes correcting the skeleton information in the correction section based on coordinates of a predetermined joint in the first skeleton information, coordinates of a predetermined joint in the second skeleton information, and coordinates of an instrument.

9. The correction program according to claim 8, wherein the correction processing includes determining whether the human body is in contact with the instrument based on the coordinates of the predetermined joint in the first skeleton information, the coordinates of the predetermined joint in the second skeleton information, and the coordinates of the instrument, and correcting the skeleton information in the correction section such that the predetermined joint in the corrected skeleton information is in contact with the instrument when the human body is in contact with the instrument.

10. A correction program that causes a computer to execute the following processing:

acquiring time-series skeleton information in which a plurality of joints included in a human body and coordinates of the plurality of joints are set respectively; and

correcting skeleton information in a correction section based on coordinates of a predetermined joint in first skeleton information in front of the correction section with respect to the time-series skeleton information, coordinates of a predetermined joint in second skeleton information behind the correction section, and coordinates of an instrument.

11. An information processing apparatus comprising a control unit that executes the following processing:

acquiring time-series skeleton information in which a plurality of joints included in a human body and coordinates of the plurality of joints are set respectively;
determining a motion state in a correction section based on first skeleton information in front of the correction section and second skeleton information behind the correction section with respect to the time-series skeleton information; and
correcting skeleton information in the correction section based on a result of determining the motion state.

12. The information processing apparatus according to claim 11, wherein

paths from coordinates of each joint in the first skeleton information to coordinates of each joint in the second skeleton information include a first path and a second path longer than the first path, and
the correction processing includes selecting the first path or the second path based on the motion state and the number of frames of the skeleton information included in the correction section, and correcting the skeleton information in the correction section based on a result of the selection.

13. The information processing apparatus according to claim 11, wherein the correction processing includes correcting the skeleton information in the correction section based on coordinates of a predetermined joint in the first skeleton information, coordinates of a predetermined joint in the second skeleton information, and coordinates of an instrument.

14. The information processing apparatus according to claim 13, wherein the correction processing includes determining whether the human body is in contact with the instrument based on the coordinates of the predetermined joint in the first skeleton information, the coordinates of the predetermined joint in the second skeleton information, and the coordinates of the instrument, and correcting the skeleton information in the correction section such that the predetermined joint in the corrected skeleton information is in contact with the instrument when the human body is in contact with the instrument.

15. An information processing apparatus comprising a control unit that executes the following processing:

acquiring time-series skeleton information in which a plurality of joints included in a human body and coordinates of the plurality of joints are set respectively; and
correcting skeleton information in a correction section based on coordinates of a predetermined joint in first skeleton information in front of the correction section with respect to the time-series skeleton information, coordinates of a predetermined joint in second skeleton information behind the correction section, and co-ordinates of an instrument.

# FIG.1

# FIG.2

| SIGN | JOINT NAME |
|------|------------|
| ar0 | SPINE_BASE |
| ar1 | SPINE_MID |
| ar2 | SPINE_SHOULDER |
| ar3 | HEAD |
| ar4 | SHOURLDER_LEFT |
| ar5 | ELBOW_LEFT |
| ar6 | WRIST_LEFT |
| ar7 | SHOURLDER_RIGHT |
| ar8 | ELBOW_RIGHT |
| ar9 | WRIST_RIGHT |
| ar10 | HIP_LEFT |
| ar11 | KNEE_LEFT |
| ar12 | ANKLE_LEFT |
| ar13 | FOOT_LEFT |
| ar14 | HIP_RIGHT |
| ar15 | KNEE_RIGHT |
| ar16 | ANKLE_RIGHT |
| ar17 | FOOT_RIGHT |
| ar18 | NECK |
| ar19 | HAND_TIP_LEFT |
| ar20 | HAND_TIP_RIGHT |

FIG.3

30a

U4

100

INFORMATION
PROCESSING
APPARATUS

30b

FIG.4

14s    14s-1

14e-1    14-1    14s-1    14e

# FIG.5

# FIG.6

```
                    ┌──────────────┐
                    │    START     │
                    └──────┬───────┘
                           ▼
        ┌─────────────────────────────────────┐
        │ RECEIVE INPUTS OF 3D KEY POINTS,     │
        │ WHOLE-BODY POSITION, WHOLE-BODY      │─── S101
        │ ROTATION, AND EACH JOINT ROTATION    │
        └─────────────────┬───────────────────┘
                          ▼
        ┌─────────────────────────────────────┐
        │ LONG-TERM MOTION DETERMINATION       │─── S102
        └─────────────────┬───────────────────┘
                          ▼        S103
               ◇─────────────────────◇        YES
               │  LONG-TERM MOTION?  │──────────────┐
               ◇─────────────────────◇              │
                          │ NO                       │
                          ▼                          ▼        S104
        ┌─────────────────────────────┐   ┌──────────────────────┐
        │ STATIONARY MOTION           │   │ INTERPOLATION BY     │
        │ DETERMINATION       S105    │   │ MACHINE TRAINING     │
        └─────────────┬───────────────┘   │ MODEL                │
                      ▼        S106        └──────────┬───────────┘
               ◇─────────────────◇   YES              │
               │ STATIONARY      │───────┐            │
               │ MOTION?         │       │            │
               ◇─────────────────◇       │            │
                      │ NO               │            │
                      ▼                  │            │
        ┌─────────────────────────┐      │            │
        │ CIRCULAR MOTION         │──S108 │            │
        │ DETERMINATION           │      │            │
        └─────────────┬───────────┘      │            │
                      ▼        S109       │            │
               ◇─────────────────◇   NO   │            │
               │ CIRCULAR MOTION?│────────┼───┐        │
               ◇─────────────────◇        │   │        │
                      │ YES               │   │        │
                      ▼                   │   │        │
        ┌─────────────────────────┐       │   │        │
        │ CIRCULAR MOTION         │──S110 │   │        │
        │ DIRECTION DETERMINATION │       │   │        │
        └─────────────┬───────────┘       │   │        │
                      ▼        S111        │   │        │
               ◇─────────────────◇   NO    │   │        │
               │ SAME DIRECTION  │─────────┼───┤        │
               │ AS LONG PATH?   │         │   │        │
               ◇─────────────────◇         │   │        │
                      │ YES               │   │        │
                      ▼        S112        │   ▼  S107   │
        ┌─────────────────────────┐       │ ┌──────────────────┐
        │ INTERPOLATION BY        │       │ │ INTERPOLATION BY │
        │ Slerp (LONG PATH)       │       │ │ Slerp(SHORT PATH)│
        └─────────────┬───────────┘       │ └────────┬─────────┘
                      │◄──────────────────┴──────────┴──────────┘
                      ▼
        ┌─────────────────────────────┐
        │ OUTPUT INTERPOLATION RESULT  │── S113
        └─────────────┬───────────────┘
                      ▼
               ┌──────────────┐
               │     END      │
               └──────────────┘
```

FIG.7

PROJECTION
ON yz PLANE

# FIG.8

# FIG.9

## FIG.10

## FIG.11

# FIG.12

# FIG.13

# FIG.14

| step | s | e | fs | fe | E | N | IS FIRST CONVERGENCE CONDITION SATISFIED? |
|------|------|------|-----|-----|-----|----|---------------------------------------------|
| 1 | 1054 | 1060 | 104 | 115 | 219 | 7 | FALSE |
| 2 | 1054 | 1061 | 104 | 15 | 119 | 8 | FALSE |
| 3 | 1053 | 1061 | 180 | 15 | 195 | 9 | FALSE |
| 4 | 1052 | 1061 | 23 | 15 | 38 | 10 | TRUE |

# FIG.15

| step | s | e | fs | fe | E | N | IS SECOND CONVERGENCE CONDITION SATISFIED? |
|---|---|---|---|---|---|---|---|
| 1 | 1054 | 1060 | 104 | 115 | 219 | 7 | FALSE |
| 2 | 1054 | 1061 | 104 | 15 | 119 | 8 | FALSE |
| 3 | 1053 | 1061 | 180 | 15 | 195 | 9 | TRUE |

EP 4 628 173 A1

# FIG.16

INFORMATION PROCESSING APPARATUS — 100

COMMU-NICATION UNIT — 110

INPUT UNIT — 120

DISPLAY UNIT — 130

CONTROL UNIT — 150

ACQUISITION UNIT — 151

3D KEY POINT GENERATION UNIT — 152

CORRECTION SECTION SPECIFYING UNIT — 153

CONVERSION PROCESSING UNIT — 154

CORRECTION PROCESSING UNIT — 155

EVALUATION UNIT — 156

STORAGE UNIT — 140

VIDEO BUFFER — 141

3D KEY POINT TABLE — 142

MACHINE TRAINING MODEL — 143

ELEMENT RECOGNITION TABLE — 144

## FIG.17

EP 4 628 173 A1

142

| FRAME NUMBER | ar0 (SPINE_BASE) | ar1 (SPINE_MID) | .... | ar20 HAND_TIP_RIGHT |
|---|---|---|---|---|
| 0001 | (x1-0,y1-0,z1-0) | (x1-1,y1-1,z1-1) | .... | (x1-20,y1-20,z1-20) |
| 0002 | (x2-0,y2-0,z2-0) | (x2-1,y2-1,z2-1) | .... | (x2-20,y2-20,z2-20) |
| 0003 | (x3-0,y3-0,z3-0) | (x3-1,y3-1,z3-1) | .... | (x3-20,y3-20,z3-20) |
| 0004 | (x4-0,y4-0,z4-0) | (x4-1,y4-1,z4-1) | .... | (x4-20,y4-20,z4-20) |
| .... | .... | .... | .... | .... |

## FIG.18

## FIG.19

rn-1

GLOBAL COORDINATE SYSTEM

rn-2

ROOT COORDINATE SYSTEM

# FIG.20

# FIG.21

FIG.22

# FIG.23

n=v_{src}×v_{tar_local}

v_{tar_local}     v_{src}

θ

# FIG.24

START

ACQUIRE VIDEO DATA AND
STORE VIDEO DATA IN VIDEO BUFFER — S201

GENERATE 3D KEY POINT SEQUENCE BASED ON
TIME-SERIES IMAGE FRAMES IN VIDEO DATA — S202

EXECUTE CORRECTION SECTION SPECIFYING
PROCESSING — S203

SPECIFY PREVIOUS FRAME AND SUBSEQUENT
FRAME WITH RESPECT TO CORRECTION SECTION — S204

CALCULATE WHOLE-BODY POSITION,
WHOLE-BODY ROTATION, AND EACH JOINT
ROTATION BASED ON 3D KEY POINTS — S205

EXECUTE CORRECTION PROCESSING — S206

UPDATE 3D KEY POINTS IN CORRECTION SECTION — S207

PERFORM EVALUATION BASED ON 3D KEY POINTS
AND OUTPUT EVALUATION RESULT — S208

END

## FIG.25

START

ACQUIRE 3D KEY POINT SEQUENCE ~S301

CALCULATE ABNORMAL FEATURE FOR
EACH FRAME OF 3D KEY POINT SEQUENCE ~S302

SPECIFY ABNORMAL SECTION BY
EXECUTING FIRST ABNORMALITY DETECTION ~S303

OPTIMIZE ABNORMAL SECTION BY
EXECUTING SECOND ABNORMALITY DETECTION ~S304

SET OPTIMIZED ABNORMAL SECTION
AS CORRECTION SECTION ~S305

END

## FIG.26

START

DETERMINE MOTION STATE BASED ON 3D KEY
POINTS, WHOLE-BODY POSITION, WHOLE-BODY
ROTATION, AND EACH JOINT ROTATION ~S401

EXECUTE INTERPOLATION PROCESSING
CORRESPONDING TO MOTION STATE ~S402

EXECUTE CORRECTION PROCESSING BASED
ON CONTACT WITH INSTRUMENT ~S403

OUTPUT CORRECTION RESULT ~S404

END

## FIG.27

```
           ┌──────────────┐
           │    START     │
           └──────┬───────┘
                  ↓
   ┌──────────────────────────────┐
   │ DETERMINE MOTION STATE BASED ON │ ～S501
   │ 3D KEY POINTS, WHOLE-BODY        │
   │ POSITION, WHOLE-BODY ROTATION,   │
   │ AND EACH JOINT ROTATION          │
   └──────────────┬─────────────────┘
                  ↓
   ┌──────────────────────────────┐
   │ PERFORM INSTRUMENT CONTACT    │ ～S502
   │ DETERMINATION                 │
   └──────────────┬────────────────┘
                  ↓
                          S503
            ◇ IS PERSON IN CONTACT ◇ ──NO──┐
            ◇ WITH INSTRUMENT?     ◇        │
                  │ YES                      ↓
                  ↓                  ┌─────────────────┐
   ┌──────────────────────────┐     │ INTERPOLATE      │ ～S505
   │ INTERPOLATE WHOLE-BODY    │     │ WHOLE-BODY       │
   │ POSITION BASED ON         │     │ POSITION BASED ON│
   │ INSTRUMENT-CENTERED       │     │ PREDICTION OF    │
   │ PREDICTION        ～S504   │     │ MOTION           │
   └──────────────┬───────────┘     └────────┬────────┘
                  ↓←──────────────────────────┘
   ┌──────────────────────────┐
   │ OUTPUT INTERPOLATION RESULT │ ～S506
   └──────────────┬───────────┘
                  ↓
           ┌──────────────┐
           │     END      │
           └──────────────┘
```

## FIG.28

```
           ┌──────────────┐
           │    START     │
           └──────┬───────┘
                  ↓
   ┌────────────────────────────────────────┐
   │ ACQUIRE PLURALITY OF NORMAL 3D KEY POINTS│ ～S601
   │ AND PLURALITY OF ABNORMAL 3D KEY POINTS  │
   └──────────────────┬─────────────────────┘
                      ↓
   ┌────────────────────────────────────────┐
   │ CALCULATE ABNORMAL FEATURE OF EACH 3D   │ ～S602
   │ KEY POINT                               │
   └──────────────────┬─────────────────────┘
                      ↓
   ┌────────────────────────────────────────┐
   │ SET BOUNDARY VALUE AT WHICH DEGREE OF   │ ～S603
   │ SEPARATION BETWEEN DISTRIBUTION OF      │
   │ NORMAL 3D KEY POINTS AND DISTRIBUTION   │
   │ OF ABNORMAL 3D KEY POINTS IS MAXIMUM    │
   │ AS FIRST ABNORMALITY DETECTION THRESHOLD│
   └──────────────────┬─────────────────────┘
                      ↓
   ┌────────────────────────────────────────┐
   │ SET START POSITION OF THRESHOLD SEARCH  │ ～S604
   │ SECTION AS SECOND ABNORMALITY DETECTION │
   │ THRESHOLD                               │
   └──────────────────┬─────────────────────┘
                      ↓
           ┌──────────────┐
           │     END      │
           └──────────────┘
```

FIG.29

## FIG.30

FIG.31

# FIG.32

COMPUTER 200

| CPU 201 | INPUT DEVICE 202 | DISPLAY 203 | COMMUNICA-TION DEVICE 204 | INTERFACE DEVICE 205 |

208 BUS

**RAM 206**

- ACQUISITION PROCESS 206a
- 3D KEY POINT GENERATION PROCESS 206b
- CORRECTION SECTION SPECIFYING PROCESS 206c
- CONVERSION PROCESSING PROCESS 206d
- CORRECTION PROCESSING PROCESS 206e
- EVALUATION PROCESS 206f

**HARD DISK DEVICE 207**

- ACQUISITION PROGRAM 207a
- 3D KEY POINT GENERATION PROGRAM 207b
- CORRECTION SECTION SPECIFYING PROGRAM 207c
- CONVERSION PROCESSING PROGRAM 207d
- CORRECTION PROCESSING PROGRAM 207e
- EVALUATION PROGRAM 207f

EP 4 628 173 A1

# FIG.33

## FIG.34

EP 4 628 173 A1

FIG.35

FIG.36

Slerp

Lerp

## FIG.37

# FIG.38

## INTERNATIONAL SEARCH REPORT

| International application No. |
| --- |
| **PCT/JP2022/043827** |

| | |
| --- | --- |
| **A. CLASSIFICATION OF SUBJECT MATTER** | |
| *A63B 69/00*(2006.01)i; *A63B 71/06*(2006.01)i<br>FI: A63B69/00 C; A63B69/00 A; A63B71/06 M | |
| According to International Patent Classification (IPC) or to both national classification and IPC | |

| **B. FIELDS SEARCHED** |
| --- |
| Minimum documentation searched (classification system followed by classification symbols)<br>A63B69/00; A63B71/06 |
| Documentation searched other than minimum documentation to the extent that such documents are included in the fields searched<br>Published examined utility model applications of Japan 1922-1996<br>Published unexamined utility model applications of Japan 1971-2023<br>Registered utility model specifications of Japan 1996-2023<br>Published registered utility model applications of Japan 1994-2023 |
| Electronic data base consulted during the international search (name of data base and, where practicable, search terms used) |

| **C.** | **DOCUMENTS CONSIDERED TO BE RELEVANT** | |
| --- | --- | --- |
| Category* | Citation of document, with indication, where appropriate, of the relevant passages | Relevant to claim No. |
| A | WO 2019/049216 A1 (FUJITSU LIMITED) 14 March 2019 (2019-03-14)<br>in particular, abstract, claims | 1-15 |
| A | JP 2020-5192 A (CANON KABUSHIKI KAISHA) 09 January 2020 (2020-01-09)<br>particularly paragraphs [0032], [0048]-[0059] | 1-15 |
| A | JP 2015-186531 A (THE UNIVERSITY OF TOKYO) 29 October 2015 (2015-10-29)<br>particularly paragraphs [0055]-[0063], [0076] | 1-15 |
| A | US 10679046 B1 (MAX-PLANCK-GESELLSCHAFT ZUR FORDERUNG DER<br>WISSENSCHAFTEN E.V.) 09 June 2020 (2020-06-09)<br>in particular, abstract, claims | 1-15 |
| A | US 2022/0241642 A1 (ALTIS MOVEMENT TECHNOLOGIES, INC.) 04 August 2022<br>(2022-08-04)<br>in particular, abstract, claims | 1-15 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 January 2023** | **31 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/043827**

| Patent document cited in search report | | | Publication date (day/month/year) | Patent family member(s) | | | Publication date (day/month/year) |
|---|---|---|---|---|---|---|---|
| WO | 2019/049216 | A1 | 14 March 2019 | US | 2020/0188736 | A1 | |
| | | | | in particular, abstract, claims | | | |
| | | | | EP | 3679994 | A1 | |
| | | | | CN | 111093782 | A | |
| JP | 2020-5192 | A | 09 January 2020 | US | 2020/0005670 | A1 | |
| | | | | particularly paragraphs [0041], [0055]-[0062] | | | |
| JP | 2015-186531 | A | 29 October 2015 | (Family: none) | | | |
| US | 10679046 | B1 | 09 June 2020 | (Family: none) | | | |
| US | 2022/0241642 | A1 | 04 August 2022 | US | 2022/0245836 | A1 | |
| | | | | in particular, abstract, claims | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017138915 A

**Non-patent literature cited in the description**

- **FELIX G. HARVEY et al.** Robust Motion In-betweening. *ACM Transactions on Graphics (TOG),* 2020

- **N. OTSU**. A threshold selection method from graylevel histograms. *IEEE Trans. Syst. Man Cybern.*, 1979, vol. 9 (1), 62-66